(19) Europäisches Patentamt
European Patent Office
Office européen des brevets

(11) EP 4 621 660 A1

(12) EUROPEAN PATENT APPLICATION

(43) Date of publication:
**24.09.2025 Bulletin 2025/39**

(21) Application number: **24223435.9**

(22) Date of filing: **27.12.2024**

(51) International Patent Classification (IPC):
***G06N 3/10*** (2006.01) ***G06N 20/00*** (2019.01)
*G06N 3/04* (2023.01) *G06F 3/04847* (2022.01)

(52) Cooperative Patent Classification (CPC):
**G06N 3/10; G06F 3/0482; G06N 20/00;** G06N 3/04

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **21.03.2024 JP 2024045724**

(71) Applicant: **SCREEN Holdings Co., Ltd.**
**Kyoto-shi, Kyoto 602-8585 (JP)**

(72) Inventors:
- **OKAYAMA, Toshiyuki**
  **Kyoto-shi, Kyoto, 602-8585 (JP)**
- **SHIMADA, Yoshinori**
  **Kyoto-shi, Kyoto, 602-8585 (JP)**
- **CHATANI, Sota**
  **Kyoto-shi, Kyoto, 602-8585 (JP)**
- **HAMADA, Yasuhiro**
  **Kyoto-shi, Kyoto, 602-8585 (JP)**

(74) Representative: **Goddar, Heinz J.**
**Boehmert & Boehmert**
**Anwaltspartnerschaft mbB**
**Pettenkoferstrasse 22**
**80336 München (DE)**

# (54) LEARNING MODEL EVALUATION ASSISTANCE DEVICE AND LEARNING MODEL EVALUATION ASSISTANCE PROGRAM

(57) A learning model evaluation assistance device includes a model information displayer, a model selector and an output displayer. The model information displayer displays, on a display device, in a selectable manner, a plurality of learning model being stored in a predetermined storage area and having a same interface. The model selector selects at least one learning model from among the plurality of learning models displayed on the display device. The output displayer displays, on the display device, an output result provided by the at least one learning model.

*FIG.17*

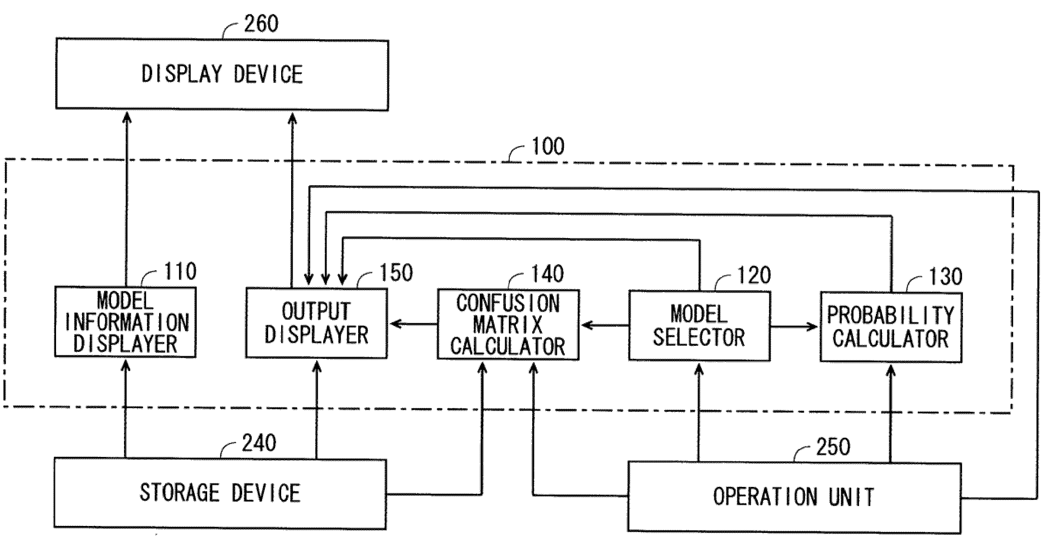


EP 4 621 660 A1

## Description

BACKGROUND

Technical Field

The present disclosure relates to a learning model evaluation assistance device and a learning model evaluation assistance program.

Description of Related Art

In the field of artificial intelligence (AI), a learning model such as a neural network is subjected to machine learning such that the learning model learns a training data set, and a trained learning model is generated. For example, JP 2021-047104 A describes a training device that generates a training data set, and subjects a learning model to machine learning using the training data set and causes the learning model to learn the relationship between a substrate image, and the presence or absence of a defect to create a trained learning model.

SUMMARY

The characteristics of a learning model differ depending on the algorithm used to create the learning model. Therefore, a plurality of learning models may be respectively created using a plurality of different algorithms. In this case, a user evaluates the characteristics of each learning model, thereby selecting and using a learning model having characteristics most suitable for the purpose from among the plurality of created learning models. Therefore, it is desired to develop a device capable of easily evaluating the characteristics of a learning model.

An object of the present disclosure is to provide a learning model evaluation assistance device and a learning model evaluation assistance program capable of easily evaluating characteristics of a learning model.

A learning model evaluation assistance device according to one aspect of the present disclosure includes a model information displayer that displays a plurality of learning models being stored in a predetermined storage area and having a same interface on a display device in a selectable manner, a model selector that selects at least one learning model from among the plurality of learning models displayed on the display device, and an output displayer that displays an output result provided by the at least one learning model on the display device.

A learning model evaluation assistance program according to another aspect of the present disclosure causes a computer to execute a model information display process of displaying, on a display device, in a selectable manner, a plurality of learning models being stored in a predetermined storage area and having a same interface, a model selection process of selecting at least one learning model from among the plurality of learning models displayed on the display device, and an output display process of displaying, on the display device, an output result provided by the at least one learning model.

With the present disclosure, the characteristics of a learning model can be easily evaluated.

Other features, elements, characteristics, and advantages of the present disclosure will become more apparent from the following description of preferred embodiments of the present disclosure with reference to the attached drawings.

BRIEF DESCRIPTION OF THE DRAWING

Fig. 1 is a diagram showing a learning model evaluation assistance system including a learning model evaluation assistance device according to one embodiment of the present disclosure;
Fig. 2 is a diagram for explaining a specific example of a classification task;
Fig. 3 is a diagram showing one example of a confusion matrix stored in a storage device;
Fig. 4 is a diagram showing one example of a menu screen;
Fig. 5 is a diagram showing one example of a queue screen;
Fig. 6 is a diagram showing one example of a training curve screen;
Fig. 7 is a diagram showing one example of a training result screen;
Fig. 8 is a diagram showing one example of a detail screen;
Fig. 9 is a diagram showing one example of an expanded detail screen;
Fig. 10 is a diagram showing one example of the expanded detail screen;
Fig. 11 is a diagram showing one example of the expanded detail screen;
Fig. 12 is a diagram showing one example of the expanded detail screen;

Fig. 13 is a diagram showing one example of a weighting adjustment screen;
Fig. 14 is a diagram showing one example of a test evaluation screen;
Fig. 15 is a diagram showing one example of an alignment screen;
Fig. 16 is a diagram showing one example of a superimposition screen;
Fig. 17 is a block diagram showing the functional configuration of the learning model evaluation assistance device of Fig. 1;
Fig. 18 is a flowchart showing a detail screen display process;
Fig. 19 is a flowchart showing a probability calculation process;
Fig. 20 is a flowchart showing a weighting adjustment process; and
Fig. 21 is a flowchart showing a test evaluation display process.

## DETAILED DESCRIPTION

### 1. Learning Model Evaluation Assistance System

A learning model evaluation assistance device and a learning model evaluation assistance program according to one embodiment of the present disclosure will be described below with reference to the drawings. Fig. 1 is a diagram showing a learning model evaluation assistance system including a learning model evaluation assistance device according to one embodiment of the present disclosure. As shown in Fig. 1, the learning model evaluation assistance system 200 includes a CPU (Central Processing Unit) 210, a RAM (Random Access Memory) 220, a ROM (Read Only Memory) 230, a storage device 240, an operation unit 250, a display device 260, an input-output I/F (Interface) 270 and a bus 280.

The CPU 210, the RAM 220, the ROM 230, the storage device 240, the operation unit 250, the display device 260 and the input-output I/F 270 are connected to the bus 280. The learning model evaluation assistance device 100 includes the CPU 210, the RAM 220 and the ROM 230. The learning model evaluation assistance device 100 may be realized by a computer including the CPU 210, the RAM 220 and the ROM 230.

The CPU 210 executes a learning model evaluation assistance process, described below, by executing the learning model evaluation assistance program. The RAM 220 is made of a volatile memory, for example, is used as a work area for the CPU 210 and temporarily stores various data. The ROM 230 is made of a non-volatile memory, for example, and stores a computer program such as a system program.

The storage device 240 includes a storage medium such as a hard disc, an optical disc, a magnetic disc or a memory card, and stores the learning model evaluation assistance program in advance. Further, the storage device 240 stores various information. The information stored in the storage device 240 will be described below. A recording medium 290 such as a CD (Compact Disc) - ROM is attachable to and detachable from the storage device 240. Therefore, the learning model evaluation assistance program may be provided in the form of being stored in the recording medium 290, and may be installed in the storage device 240 by being connected to the storage device 240.

The operation unit 250 is an input device such as a keyboard or a mouse. The operation unit 250 is operated by a user for execution of various designations, various selections and the like. The display device 260 includes a liquid crystal display, for example. The display device 260 displays various screens including a GUI (Graphical User Interface). The operation unit 250 and the display device 260 may be integrally formed of a touch panel device.

The input-output I/F 270 is connected to a network and connects the CPU 210 to another computer connected to the network. Further, in a case in which the input-output I/F 270 is connected to a communication network, the learning model evaluation assistance program distributed from a server computer connected to the communication network may be installed in the storage device 240. Further, the learning model evaluation assistance program may be installed in the ROM 230.

### 2. Storage Device

The storage device 240 stores a plurality of learning models, a plurality of detail information pieces and a plurality of confusion matrices. The plurality of detail information pieces are information pieces respectively used when the plurality of learning models are created. Therefore, each learning model is stored while being associated with the detail information piece used when the learning model is created. The plurality of confusion matrices is one of the output results of each of the plurality of learning models. Therefore, each learning model is stored while being associated with the confusion matrices of the learning model. Note that the plurality of learning models, the plurality of detail information pieces and the plurality of confusion matrices may be stored in a server computer or a database computer instead of the storage device 240.

The plurality of learning models stored in the storage device 240 or the like have the same interface. An interface is a generic term for the shape and the effects of function of each of input and output of a learning model. Specifically, when a learning model has an interface, it means that the learning model receives a combination of one or more numeric strings for each of input and output, the learning model has one or more functions for processing the numeric strings, and the learning model clarifies a method of designating the form and the function of each of input and output. In other words, a plurality of learning models having the same interface have the same input and output formats, and the plurality of learning models have the same type of function and the same method of designating the function.

In the present example, each learning model executes a classification task of classifying an image to be classified into one of a plurality of classes. Specifically, each learning model identifies an object included in the image to be classified, and classifies the identified object into one of the plurality of classes. Here, the plurality of learning models are created using different detail information pieces. Therefore, the characteristics of the plurality of learning models are different from one another. A detail information piece includes information pieces of a plurality of items. The information pieces of the plurality of items are training data, information about augmentation, and information about a learning network or a hyperparameter, for example.

The training data is the image data to which label information, which is an objective variable in supervised learning, is assigned, and is stored in the storage device 240 of Fig. 1, or the like. The label information is the information for identifying an object included in an image represented by image data. For example, in a case in which a learning model is trained to learn a classification task of classifying an object included in an image represented by image data into any one of a dog, a cat, a bird and a deer, label information is a value indicating any one of a dog, a cat, a bird and a deer.

A large number of training data pieces are required to create each learning model. Therefore, image data serving as training data may be duplicated by augmentation. Augmentation includes a size-enlargement process, a size-reduction process, an inversion process, a rotation process, a horizontal movement process, a blackening process and a homography conversion process. The size-enlargement process is a process of generating image data that is obtained when the size of a portion of an object in image data is enlarged. The size-reduction process is a process of generating image data that is obtained when the size of a portion of an object in image data is reduced.

The inversion process is a process of generating image data obtained when the direction of an object in image data is inverted. The direction of the object includes an upward-and-downward direction or a leftward-and-rightward direction. The rotation process is a process of generating image data obtained when an object in image data is rotated. A rotation angle may be a predetermined angle or an angle designated by the user. The horizontal movement process is a process of generating image data obtained when an object in image data is moved horizontally. The number of pixels or a direction of the parallel movement may be a predetermined number of pixels or a predetermined direction, or the number of pixels or a direction designated by the user.

The blackening process is a process of generating image data obtained when pixel values of unnecessary portions other than an object in image data are converted into a value indicating black. The homography conversion process is a process of generating image data obtained when an object in image data is converted into another object with use of a homography matrix.

The learning network is a deep learning network used for generating a learning model. Specifically, the learning network includes EfficientNet, CNN (Convolutional Neural Network), SWEM NN (Simple Word-Embedding-based Methods Neural Network) or the like.

The hyperparameter is a parameter used to control the behavior of various algorithms defined by a learning model. The hyperparameter includes a training count (epoch count), a patch size, an optimization function and a learning rate, for example. The patch size is a value that defines the maximum value of training data to be learned by a learning model in one go during machine learning. The hyperparameter may further include the number of layers of a neural network, the number of neurons per layer, a kernel size or the like.

3. Learning Model

A learning model classifies an object included in an image to be classified into one of a plurality of classes. Specifically, a prediction probability that an object included in an image to be classified corresponds to each of the plurality of classes is output as an objective variable. The object is classified into the class corresponding to the highest prediction probability among the plurality of classes.

Here, even in a case in which the prediction probability for a particular class is not the highest, when the prediction probability for the class is relatively high, it may be desirable to classify an object into the class. As such, a weight coefficient is set for each class. This can increase the sensitivity for identifying the specific class. A plurality of weight coefficients respectively corresponding to the plurality of classes are set such that the sum of the plurality of weight coefficients is 1.

The prediction probability for each class is corrected by multiplication of the prediction probability output for the class by the weight coefficient set for the class. Thereafter, the prediction probability for each class is updated such that the sum of the plurality of prediction probabilities respectively corresponding to the plurality of classes is 1. Thus, in a case in which the prediction probability for the specific class is relatively large, an object can be classified into the class.

Fig. 2 is a diagram for explaining a specific example of a classification task. As shown in Fig. 2, the learning model of the present example classifies an object included in an image to be classified into one of a dog, a cat, a bird and a deer.

Therefore, the prediction probability that the object included in the image to be classified corresponds to each of a dog, a cat, a bird and a deer is calculated. In regard to the example shown in the top left field and the middle left field of Fig. 2, the prediction probabilities for a dog, a cat, a bird and a deer are 0.5, 0.2, 0.2 and 0.1, respectively. Therefore, the object is classified into a dog having the highest prediction probability.

In the present example, even in a case in which the prediction probability for a cat is not the highest, when the prediction probability for a cat is relatively high, it is assumed that the object is classified into a cat. In this case, the weight coefficient for a cat is set higher than the weight coefficients for other classes. In regard to the example shown in the lower left field of Fig. 2, the weight coefficients for a dog, a cat, a bird and a deer are 0.1, 0.7, 0.1 and 0.1, respectively. Therefore, as shown in the middle field of Fig. 2, the prediction probabilities for a dog, a cat, a bird and a deer are corrected to 0.05, 0.14, 0.02 and 0.01, respectively.

Thereafter, the prediction probabilities for a dog, a cat, a bird and a deer are updated such that the sum of the plurality of prediction probabilities respectively corresponding to a dog, a cat, a bird and a deer is 1. Specifically, as shown in the right field of Fig. 2, the predicted probabilities for a dog, a cat, a bird and a deer are respectively updated to 0.23, 0.64, 0.09 and 0.04. In this case, the prediction probability for a cat is the highest. Thus, the object can be classified into a cat.

In this manner, the prediction probability $x_i'$ for the class i after the update is calculated by the following formula (1). Here, n is the number of classes (4 in the present example). $x_i$ is the prediction probability that is output in regard to the class i without setting of a weight coefficient, $\omega_i$ is a weight coefficient set for the class i. The weight coefficient $\omega_i$ set for the class i can be changed on a weighting adjustment screen displayed on the display device 260 of Fig. 1. Details will be described below.

[Formula 1]

$$x_i' = \frac{x_i \omega_i}{\sum_{j=1}^{n} x_j \omega_j} \quad \cdots (1)$$

4. Confusion Matrix

A confusion matrix is one of the output results of a learning model, and is generated using part of training data (hereinafter referred to as evaluation data) when the learning model is created. Fig. 3 is a diagram showing one example of a confusion matrix stored in the storage device 240. As shown in Fig. 3, the confusion matrix includes a plurality of cells aligned in a column direction (longitudinal direction) and a row direction (lateral direction). Each cell describes a component of the confusion matrix.

The components in the column direction correspond to label information pieces provided to evaluation data pieces. The components in the row direction correspond to the results of classification performed by a learning model with respect to images represented by the evaluation data pieces (hereinafter referred to as evaluation images). Thus, when the number of classes is n, the confusion matrix has the components of n x n. The value of the component described in each cell indicates the number of the evaluation images that have the label information of the corresponding column and are classified into the class of the corresponding row.

In the example of Fig. 3, 12 evaluation images are used to generate the confusion matrix. Of the 12 evaluation images, three evaluation images have the label information of a dog, other three evaluation images have the label information of a cat, yet other three evaluation images have the label information of a bird, and the remaining three evaluation images have the label information of a deer.

As the result of classification, all of the three evaluation images having the label information of a dog are classified into a dog. All of the three evaluation images having the label information of a cat are classified into a cat. All of the three evaluation images having the label information of a deer are classified into a deer. On the other hand, in regard to the three evaluation images having the label information of a bird, 1 evaluation image is classified into a dog, and the 2 evaluation images are classified into a bird.

That is, according to the confusion matrix of Fig. 3, out of the 12 evaluation images in the training data, 11 evaluation images are correctly classified, and 1 evaluation image is incorrectly classified. In this manner, the confusion matrix visually represents the superiority or inferiority of the learning model. Basically, it is considered that, in a case in which the values of the diagonal components aligned from the upper left to the lower right of the confusion matrix are not 0 and the values of the other components are 0, a learning model can perform a classification task with high accuracy.

The value of each component of the confusion matrix in Fig. 3 is the number (absolute number) of evaluation images that have the label information of the corresponding column and are classified into the class of the corresponding row. However, the embodiment is not limited to this. The value of each component of the confusion matrix may be a rate at which the evaluation images having the label information of the corresponding column are classified into the class of the corresponding row, that is, a relative value. For example, the value of each component of the confusion matrix may be a value obtained when the above-mentioned number of classification is divided by the sum value of the corresponding components in the row direction or the sum value of the corresponding components in the column direction.

5. Display Device

Various screens such as a menu screen are displayed on the display device 260 of Fig. 1. Using the operation unit 250 of Fig. 1, the user can perform various operations on the screen displayed on the display device 260. Fig. 4 is a diagram showing one example of a menu screen. As shown in Fig. 4, in the menu screen 10, an annotation area 11, a training area 12, an evaluation area 13, and a setting area 14 are provided. Further, a queue screen call button 15 is displayed on the menu screen 10. When the queue screen call button 15 is operated, a queue screen is displayed on the display device 260.

The annotation area 11 is operated when training data (including evaluation data) is generated. The training area 12 is operated when a learning model is created. The evaluation area 13 is operated when a learning model is evaluated. The setting area 14 is operated when a predetermined setting is performed for a learning model. The annotation area 11, the training area 12 and the setting area 14 will not be described in detail.

In the evaluation area 13, a training curve button 13a, a training result button 13b, and a test evaluation button 13c are displayed. When the training curve button 13a is operated, a training curve screen is displayed on the display device 260. When the training result button 13b is operated, a training result screen is displayed on the display device 260. When the test evaluation button 13c is operated, a test evaluation screen is displayed on the display device 260.

Fig. 5 is a diagram showing one example of a queue screen. As described above, the queue screen 20 is displayed on the display device 260 when the queue screen call button 15 of the menu screen 10 of Fig. 4 is operated. As shown in Fig. 5, in the queue screen 20, a model display area 21 and a detail information display area 22 are provided. Further, a return button 23 is displayed on the queue screen 20. When the return button 23 is operated, the queue screen 20 displayed on the display device 260 returns to the menu screen 10.

In the model display area 21, a list of recently created learning models is displayed. The user can select a desired learning model displayed in the model display area 21 by operating the operation unit 250. In the detail information display area 22, a screen showing the detail information associated with the learning model that is selected in the model display area 21 is displayed. The manner in which the screen is displayed in the detail information display area 22 is similar to the manner in which the below-mentioned detail screen is displayed.

Fig. 6 is a diagram showing one example of a training curve screen. As described above, the training curve screen 30 is displayed on the display device 260 when the training curve button 13a of the menu screen 10 of Fig. 4 is operated. As shown in Fig. 6, in the training curve screen 30, a model display area 31 and a training curve display area 32 are provided.

In the model display area 31, one or more learning models selected from among the plurality of learning models stored in the storage device 240 of Fig. 1 or the like are displayed. Further, a detail screen call button 31a is displayed so as to correspond to each learning model. In a case in which any one of detail screen call buttons 31a is operated, a detail screen, described below, in regard to the learning model corresponding to the operated detail screen call button 31a is displayed.

Further, a model addition dialog call button 31b is displayed in the model display area 31. When the model addition dialog call button 31b is operated, a model addition dialog screen (not shown) is displayed on the display device 260. In the model addition dialog screen, the user can select a desired learning model from among the plurality of learning models stored in the storage device 240 or the like. The selected learning model is added to the model display area 31 together with the detail screen call button 31a corresponding to the learning model.

The user can select one or more learning models to be evaluated from among learning models displayed in the model display area 31. In the training curve display area 32, a training curve in regard to one or more learning models selected to be evaluated are displayed. A training curve is a curve with the abscissa representing a training period and with the ordinate representing an evaluation index. The user can select one or both of the accuracy and the loss as an evaluation index.

Fig. 7 is a diagram showing one example of a training result screen. As described above, the training result screen 40 is displayed on the display device 260 when the training result button 13b of the menu screen 10 of Fig. 4 is operated. As shown in Fig. 7, a model display area 41 and a training result display area 42 are provided on the training result screen 40.

In the model display area 41, similarly to the model display area 31 of Fig. 6, one or more learning models selected from among the plurality of learning models stored in the storage device 240 of Fig. 1 or the like are displayed. Further, a detail screen call button 41a is displayed so as to correspond to each learning model. Further, a model addition dialog call button 41b is displayed in the model display area 41. The detail screen call button 41a and the model addition dialog call button 41b are used in the similar manner to the detail screen call button 31a and the model addition dialog call button 31b of Fig. 6.

The user can select a desired learning model from among the learning models displayed in the model display area 41. In the training result display area 42, a confusion matrix associated with the selected learning model is displayed. Each cell of the confusion matrix is displayed with styling in a manner (color shading in the present example) assigned to the range of the magnitude of the component described in the cell. Further, the user can select a desired cell of the confusion matrix. In a case in which any one of the cells is selected, a thumbnail image of the evaluation image corresponding to the cell is displayed in the training result display area 42. Further, a weighting adjustment button 42a is displayed in the training result display area 42. In a case in which the weighting adjustment button 42a is operated, a weighting adjustment screen, described below, is displayed.

6. Detail Screens

As described above, a detail screen is displayed on the display device 260 when the detail screen call button 31a of Fig. 6, the detail screen call button 41a of Fig. 7, a detail screen call button 511 of Fig. 14, described below, or the like is operated. A button for displaying a detail screen is provided on each of all of the screens that are displayed when the evaluation area 13 of Fig. 4 is operated. Fig. 8 is a diagram showing one example of a detail screen. As shown in Fig. 8, a plurality of information selection fields 310 are provided in the detail screen 300. Each information selection field 310 is associated with any one of detail information pieces. Further, an expansion button 311 is displayed in each information selection field 310.

In the example of Fig. 8, four information selection fields 310 are arranged in the upward-and-downward direction. The uppermost information selection field 310 is associated with data information. The second information selection field 310 from the top is associated with augmentation information. The third information selection field 310 from the top is associated with learning network information. The lowermost information selection field 310 is associated with hyperparameter information. In a case in which the expansion button 311 of any one of the information selection fields 310 is operated, the display of the detail information associated with the information selection field 310 is expanded downwardly.

Figs. 9 to 12 are diagrams showing one example of the expanded detail screen. As shown in Figs. 9 to 12, in a case in which the expansion button 311 of any one of the information selection fields 310 is operated, the display of the expansion button 311 of the information selection field 310 changes to a fold button 312. Further, one or more detail information display fields 320 are displayed below the information selection field 310. In each detail information display field 320, the detail information associated with the information selection field 310 is displayed. In a case in which the fold button 312 is operated, the detail information display field 320 is folded, and the detail screen 300 returns to the state of Fig. 8.

In the example of Figs. 9 and 10, the expansion button 311 of the uppermost information selection field 310 is operated. In this case, the data information is displayed in the detail information display field 320. In the example of Fig. 11, the expansion button 311 of the second information selection field 310 from the top is operated. In this case, augmentation information is displayed in the detail information display field 320. In the example of Fig. 12, the expansion button 311 of the third information selection field 310 from the top and the expansion button 311 of the lowermost information selection field 310 are operated. In this case, learning network information is displayed in the detail information display field 320 below the third information selection field 310 from the top. Further, hyperparameter information is displayed in the detail information display field 320 below the lowermost information selection field 310.

As shown in Fig. 9 or Fig. 11, in a case in which more information can be displayed in the detail information display field 320, a detail button 321 is displayed in the detail information display field 320. In a case in which the detail button 321 is operated, the display of the detail button 321 changes to a simple button 322 as shown in Fig. 10 or Fig. 11. Further, display of more information is added to the detail information display field 320. In a case in which the simple button 322 is operated, the display of the information added to the detail information display field 320 is folded, and the display of the simple button 322 is returned to the detail button 321.

7. Weighting Adjustment Screen

As described above, the display device 260 displays the weighting adjustment screen when the weighting adjustment button 42a of Fig. 7 is operated. Fig. 13 is a diagram showing one example of a weighting adjustment screen. As shown in Fig. 13, in the weighting adjustment screen 400, a weight coefficient adjustment slider 410, a weight coefficient adjustment table 420 and a classification result display area 430 are provided. Further, an OK button 440, a close button 450 and a reset button 460 are displayed on the weighting adjustment screen 400.

The weight coefficient adjustment slider 410 is a first GUI that receives adjustment of a weight coefficient, and includes a bar 411 and a plurality of sliders 412. The bar 411 extends in one direction (the leftward-and-rightward direction of the screen in the example of Fig. 13). The plurality of sliders 412 are aligned on the bar 411. Specifically, the number of sliders 412 is (n-1). Here, n is the number of classes of three or more. In the present example, an evaluation image is classified into any one of an airplane, a car, a bird, a cat, a deer, a dog, a frog, a horse, a ship and a truck. Therefore, n is 10, and the number of sliders 412 is 9.

The bar 411 is sectioned into n areas by the (n-1) sliders 412. The n areas of the bar 411 respectively correspond to the n classes. Further, the length of each area of the bar 411 in the one direction indicates the weight coefficient of the corresponding class. Each slider 412 is movable in two directions parallel to the one direction (i.e. the leftward direction and the rightward direction of the screen in the example of Fig. 13). Therefore, using the operation unit 250 of Fig. 1, the user can adjust the weight coefficient of a desired class by moving a desired slider 412 in a direction parallel to the one direction. In a case in which any one of the sliders 412 is moved, two weight coefficients set for two classes respectively corresponding to two areas of the bar sectioned by the slider 412 are adjusted according to a moving amount of the slider 412.

The weight coefficient adjustment table 420 is a second GUI that receives adjustment of a weight coefficient. The weight coefficient adjustment table 420 describes a plurality of weight coefficients corresponding to a plurality of classes. Using the operation unit 250, the user can rewrite the weight coefficient of a desired class described in the weight coefficient adjustment table 420. In a case in which the value of the weight coefficient of any one of the classes in the weight coefficient adjustment table 420 is rewritten, the weight coefficient set for the class is changed to a rewritten value. Further, the weight coefficients set for all of the other classes are equally changed based on the rewritten value of the weight coefficient, and the changed weight coefficients are reflected in the weight coefficient adjustment table 420.

That is, in the weight coefficient adjustment table 420, in a case in which the value of the weight coefficient of a class t is rewritten to $\omega_{t'}$, the weight coefficient of the class t is adjusted to $\omega_{t'}$. On the other hand, the weight coefficient of a class i that is not the class t is adjusted to $\omega_{i'}$ calculated by the following formula (2). Here, $\omega_i$ is a weight coefficient set for the class i before the weight coefficient is adjusted. The weight coefficient of the class i described in the weight coefficient adjustment table 420 is rewritten to the value calculated by the formula (2).

[Formula 2]

$$\omega_i' = \frac{1-\omega_t'}{\sum_{k=1}^{n}\omega_k - \omega_t'}\omega_i \qquad \cdots (2)$$

In a case in which an operation is performed on one of the weight coefficient adjustment slider 410 and the weight coefficient adjustment table 420, the operation is reflected on the other one. Therefore, in a case in which any one of the sliders 412 is moved in the weight coefficient adjustment slider 410, at least two weight coefficients of the weight coefficient adjustment table 420 are rewritten to reflect the movement. Similarly, in a case in which any one of weight coefficients is rewritten in the weight coefficient adjustment table 420, each slider 412 of the weight coefficient adjustment slider 410 moves so as to reflect the rewriting.

In a case in which a weight coefficient is adjusted by an operation of the weight coefficient adjustment slider 410 or the weight coefficient adjustment table 420, the prediction probability for each class is updated using the adjusted weight coefficient and the formula (1). That is, the prediction probability that an image to be classified corresponds to each class is calculated based on the changed weight coefficient. Further, the prediction probability for each class is updated such that the sum of the prediction probabilities calculated for all of the classes is 1.

In the classification result display area 430, the prediction probability that any evaluation image corresponds to each class provided by a learning model is displayed. In a case in which the weight coefficient adjustment slider 410 or the weight coefficient adjustment table 420 is operated, the prediction probability that an evaluation image corresponds to each class displayed in the classification result display area 430 changes in real time so as to reflect the operation. Therefore, the user can adjust a weight coefficient by operating the weight coefficient adjustment slider 410 or the weight coefficient adjustment table 420 while viewing the prediction probabilities displayed in the classification result display area 430 such that a desired output result can be obtained.

When the OK button 440 is operated, the adjusted weight coefficient is set. When the close button 450 is operated, the weighting adjustment screen 400 is closed. When the reset button 460 is operated, the weight coefficient for each class is returned to an initial value. In this case, the display of the weight coefficient adjustment slider 410 and the weight coefficient adjustment table 420 also returns to an initial state.

8. Test Evaluation Screen

In a case in which the test evaluation button 13c on the menu screen 10 of Fig. 4 is operated, a model-data selection screen (not shown) is displayed on the display device 260. In the model-data selection screen, the user can select one or more learning models to be evaluated from among the plurality of learning models stored in the storage device 240 or the like by performing a predetermined operation. Further, in the model-data selection screen, the user can select evaluation data of one or more groups to be used for evaluation of a learning model from among the evaluation data stored in the storage device 240 or the like by performing a predetermined operation. When a learning model and evaluation data are selected in the model-data selection screen, a test evaluation screen is displayed on the display device 260.

Fig. 14 is a diagram showing one example of a test evaluation screen. As shown in Fig. 14, in the test evaluation screen 500, a model-data display area 510 and a test evaluation display area 520 are provided. Further, in the test evaluation display area 520, a display method pull-down menu 530 is displayed.

In the model-data display area 510, one or more learning models that have been selected in the model-data selection screen are displayed, and the selected evaluation data of one or more groups is displayed. Further, a detail screen call button 511 is displayed so as to correspond to each learning model. In a case in which any one of detail screen call buttons 511 is operated, the detail screen 300 of Fig. 8 for the learning model corresponding to the operated detail screen call button 511 is displayed. By performing a predetermined operation on the model-data display area 510, a learning model to be displayed or evaluation data to be displayed can be added or deleted.

The user can select one or more desired learning models from among the learning models displayed in the model-data display area 510. Further, the user can select the desired evaluation data of one group from among the evaluation data displayed in the model-data display area 510. In a case in which one or more learning models and evaluation data of one group are selected in the model-data display area 510, a screen showing a confusion matrix for classification of the selected evaluation data (evaluation image) by the selected learning model is displayed in the test evaluation display area 520.

Similarly to Fig. 7, in regard to a confusion matrix displayed in the test evaluation display area 520, each cell is displayed with styling in a manner (color shading in the present example) assigned to the range of the magnitude of the component described in the cell. Here, in the example of Fig. 14, one learning model is selected in the model-data display area 510. Therefore, a confusion matrix screen 521 showing the confusion matrix of the one learning model is displayed in the test evaluation display area 520.

On the other hand, in a case in which two or more learning models are selected in the model-data display area 510, the user can display an alignment screen or a superimposition screen, described below, in the test evaluation display area 520 instead of the confusion matrix screen 521 by operating the display method pull-down menu 530. Therefore, the user can switch between the alignment screen and the superimposition screen and display a screen in the test evaluation display area 520 by operating the display method pull-down menu 530.

Fig. 15 is a diagram showing one example of an alignment screen. As shown in Fig. 15, on the alignment screen 522, two or more confusion matrices respectively representing two or more learning models selected in the model-data display area 510 are displayed side by side. The user can easily evaluate the superiority or inferiority of the two or more learning models by viewing the two or more confusion matrices displayed on the alignment screen 522.

Fig. 16 is a diagram showing one example of a superimposition screen. As shown in Fig. 16, one superimposed confusion matrix is displayed on the superimposition screen 523. Further, when the superimposition screen 523 is displayed in the test evaluation display area 520, a calculation value pull-down menu 540 is further displayed in the test evaluation display area 520. The superimposed confusion matrix is a confusion matrix in which two or more confusion matrices respectively representing two or more learning models selected in the model-data display area 510 are superimposed. Specifically, each component of the superimposed confusion matrix is a calculation value of the component of the above-mentioned two or more confusion matrices.

The user can select a calculation value for calculating each component of the superimposed confusion matrix by operating the calculation value pull-down menu 540. Calculation values include various calculation values such as an average value or a variance value. Further, in a case in which the number of selected learning models is two, calculation values further include a difference. In the example of Fig. 16, a difference is selected as a calculation value. The user can easily evaluate the superiority or inferiority of two or more learning models by viewing a confusion matrix displayed on the superimposition screen 523. In particular, in a case in which a difference is selected as a calculation value, the superiority or inferiority of the two learning models can be evaluated more easily.

9. Learning Model Evaluation Assistance Device

Fig. 17 is a block diagram showing the functional configuration of the learning model evaluation assistance device 100 of Fig. 1. As shown in Fig. 17, the learning model evaluation assistance device 100 includes a model information displayer 110, a model selector 120, a probability calculator 130, a confusion matrix calculator 140 and an output displayer 150 as functions. The functions of the learning model evaluation assistance device 100 are implemented by execution of the learning model evaluation assistance program by the CPU 210 of Fig. 1. Part or all of the functions of the learning model evaluation assistance device 100 may be implemented by hardware such as an electronic circuit.

The model information displayer 110 displays a plurality of learning models stored in the storage device 240 or the like on the display device 260 in a selectable manner. In the present example, when the test evaluation button 13c of the menu screen 10 of Fig. 4 is operated, a model-data selection screen is displayed on the display device 260. Alternatively, when the model addition dialog call button 31b of the training curve screen 30 of Fig. 6 or the model addition dialog call button 41b of the training result screen 40 of Fig. 7 is operated, a model addition dialog screen is displayed on the display device 260. A plurality of learning models are displayed on these screens in a selectable manner.

According to the designation made by the user, the model selector 120 selects at least one learning model from among the plurality of learning models on the above-mentioned screen displayed on the display device 260. The user can designate a desired learning model by operating the operation unit 250 while viewing the plurality of learning models displayed on the screen. The learning model selected by the model selector 120 is displayed in the model display area 31 of the training curve screen 30 in Fig. 6, the model display area 41 of Fig. 7, the model-data display area 510 of Fig. 14, or the like.

The model information displayer 110 can also display evaluation data stored in the storage device 240 or the like on the display device 260 in a selectable manner. In the present example, evaluation data is displayed on the model-data selection screen in a selectable manner. Further, according to designation made by the user, the model selector 120 selects evaluation data of one or more groups from among the evaluation data of the model-data selection screen displayed on the display device 260. The user can designate the desired evaluation data of the one or more groups by operating the operation unit 250 while viewing the evaluation data displayed on the model-data selection screen. The evaluation data selected by the model selector 120 is displayed in the model-data display area.

Further, according to the designation made by the user, the model selector 120 selects a learning model to be subjected to adjustment of a weight coefficient, a learning model the detail information of which is to be displayed, or a learning model to be evaluated. The user can designate a desired learning model from among the learning models displayed in the model display area 31, the model display area 41, the model-data display area 510, or the like. Further, when a learning model is evaluated, the model selector 120 selects the evaluation data of one group to be used for evaluation of the learning model according to the designation made by the user. The user can designate desired evaluation data of one group from among the evaluation data of one or more groups displayed in the model-data display area 510.

According to the designation made by the user, the probability calculator 130 changes the weight coefficient set for any one of the classes in regard to the learning model selected by the model selector 120. The user can designate a class the weight coefficient of which is to be changed and a value of the weight coefficient by operating the operation unit 250 to move any one of the sliders 412 of the weight coefficient adjustment slider 410 displayed on the weighting adjustment screen 400 of Fig. 13. In a case in which any one of the sliders 412 is moved in one direction, weight coefficients set for two classes corresponding to two areas of the bar sectioned by the slider 412 are changed according to a moving amount of the slider 412.

Alternatively, the user can designate a class the weight coefficient of which is to be changed and a value of the weight coefficient by operating the operation unit 250 to rewrite the weight coefficient of any one of the classes of the weight coefficient adjustment table 420 displayed on the weighting adjustment screen 400. In a case in which the value of the weight coefficient of any one of the classes is rewritten, the weight coefficient set for the class is changed to a rewritten value. Further, based on the rewritten value of the weight coefficient, the weight coefficients set for all of the other classes are changed to the values provided using the formula (2). The probability calculator 130 updates the prediction probability based on the changed weight coefficient and the formula (1).

In a case in which the user designates the display of the superimposition screen 523 of Fig. 16, the confusion matrix calculator 140 calculates a superimposed confusion matrix to be displayed on the superimposition screen 523. By selecting two or more learning models with the model selector 120 and operating the display method pull-down menu 530 of the superimposition screen 523 using the operation unit 250, the user can designate the display of the superimposition screen 523.

Further, the user can designate a calculation value by operating the calculation value pull-down menu 540 of the superimposition screen 523 using the operation unit 250. When each component of the confusion matrix corresponding to each of the two or more learning models selected by the model selector 120 is calculated, a superimposed confusion matrix is calculated. In a case in which the number of learning models selected by the model selector 120 is two, a calculation value includes a difference.

The output displayer 150 displays the output result of at least one learning model selected by the model selector 120 on the display device 260. In the present example, the menu screen 10 of Fig. 10 is displayed on the display device 260 as described above. The user performs an operation on the menu screen 10 and the subsequent screens using the operation unit 250. Thus, the queue screen 20 of Fig. 5, the training curve screen 30 of Fig. 6, the training result screen 40 of Fig. 7, the test evaluation screen 500 of Fig. 14 or the like is displayed on the display device 260.

Here, as described above, a learning model selected by the model selector 120 is displayed in the model display area 31 of the training curve screen 30, the model display area 41 of the training result screen 40, the model-data display area 510 of the test evaluation screen 500, or the like. Further, the evaluation data selected by the model selector 120 is displayed in the model-data display area 510 of the test evaluation screen 500.

Further, when the weighting adjustment button 42a in the training result screen 40 is operated, the weighting adjustment screen 400 of Fig. 13 is displayed as the output result of at least one learning model. In the weight coefficient adjustment slider 410 and the weight coefficient adjustment table 420 of the weighting adjustment screen 400, a weight coefficient for any one of the classes of the learning model that has been changed by the probability calculator 130 is displayed. Further, a classification result updated by the probability calculator 130 is displayed in the classification result display area 430 of the weighting adjustment screen 400.

Further, in the test evaluation screen 500, the alignment screen 522 and the superimposition screen 523 are displayed in the test evaluation display area 520 in a switchable manner. In the alignment screen 522, two or more confusion matrices respectively associated with two or more learning models selected by the model selector 120 are displayed side by side. In the superimposition screen 523, a superimposed confusion matrix calculated by the confusion matrix calculator 140 is displayed.

Further, a detail screen call button is provided in each of all of the screens that are displayed as an output result of at least one learning model when the evaluation area 13 of the menu screen 10 is operated. For example, the detail screen call button 31a is provided in the training curve screen 30. The detail screen call button 41a is provided in the training result screen 40. A detail screen call button 511 is provided in the test evaluation screen 500. In a case in which these detail screen call buttons 31a, 41a, 511 are operated, the detail screen 300 of Fig. 8 in regard to a learning model selected by the model selector 120 is displayed on the display device 260.

In a case in which any one of information pieces of a plurality of items is selected in the detail screen 300, the display of the information piece of the selected item is expanded. The user can select a desired item of the detail screen 300 using the operation unit 250. Thus, the user can easily check the details of the desired item used when the learning model is created.

10. Learning Model Evaluation Assistance Process

The learning model evaluation assistance process is a process executed by the CPU 210 by execution of the learning model evaluation assistance program by the CPU 210 of Fig. 1, and includes a detail screen display process, a probability calculation process, a weighting adjustment process and a test evaluation display process. The detail screen display process, the probability calculation process, the weight coefficient adjustment process and the test evaluation display process will be described below.

Fig. 18 is a flowchart showing a detail screen display process. As shown in Fig. 18, in the detail screen display process, the output displayer 150 determines whether a detail screen call button is operated (step S1). As described above, the detail screen call button is provided in each of all of the screens displayed when the evaluation area 13 of Fig. 4 is operated. Further, the operation of the detail screen call button includes a right-click on the detail screen call button using a mouse.

In a case in which the detail screen call button is not operated, the output displayer 150 waits until the detail screen call button is operated. In a case in which the detail screen call button is operated, the output displayer 150 causes the display device 160 to display the detail screen 300 of Fig. 8 (step S2). Thus, the detail screen display process ends.

Fig. 19 is a flowchart showing a probability calculation process. As shown in Fig. 19, in the probability calculation process, the probability calculator 130 acquires the prediction probability for each class, which is the output result of a selected learning model (step S11). Next, the probability calculator 130 multiplies the prediction probability for the class acquired in the step S11 by the weight coefficient set for each class (step S12). Here, in a case in which the weight coefficient of any one of the classes is changed by the below-mentioned weighting adjustment process, the prediction probability for the class is multiplied by a changed weight coefficient.

Next, the probability calculator 130 normalizes the prediction probability for each class such that the sum of the prediction probabilities for all of the classes calculated in the step S12 is 1 (step S13). Subsequently, the probability calculator 130 classifies an object into a class having the highest prediction probability among the prediction probabilities calculated in the step S13, thereby outputting a classification result (step S14). Thereafter, the probability calculator 130 returns to the step S12, and the steps S12 to S14 are repeated.

Fig. 20 is a flowchart showing a weighting adjustment process. As shown in Fig. 20, in the weighting adjustment process, the output displayer 150 causes the display device 260 to display the weighting adjustment screen 400 (step S21). Next, the probability calculator 130 determines whether the weight coefficient adjustment slider 410 is operated (step S22). In a case in which the weight coefficient adjustment slider 410 is not operated, the probability calculator 130 proceeds to the step S25.

In a case in which the weight coefficient adjustment slider 410 is operated, the probability calculator 130 changes the weight coefficient of any one of the classes based on a moving amount of any one of the sliders 412 of the weight coefficient adjustment slider 410 (step S23). In this case, the prediction probability for any one of the classes is updated in the above-mentioned probability calculation process. Subsequently, the output displayer 150 updates the weighting adjustment screen 400 (step S24). Thus, the display of the weight coefficient adjustment table 420 and the classification result display area 430 is updated.

In a case in which the weight coefficient adjustment slider 410 is not operated in the step S22, the probability calculator 130 determines whether the weight coefficient adjustment table 420 is operated (step S25). In a case in which the weight coefficient adjustment table 420 is not operated, the probability calculator 130 returns to the step S22.

In a case in which the weight coefficient adjustment table 420 is operated, the probability calculator 130 changes the weight coefficient of each class based on the value of the weight coefficient rewritten in the weight coefficient adjustment table 420 (step S26). In this case, the prediction probability for each class is updated in the above-mentioned probability calculation process. Subsequently, the output displayer 150 updates the weighting adjustment screen 400 (step S27). Thus, the display of the weight coefficient adjustment slider 410 and the classification result display area 430 is updated.

Thereafter, the probability calculator 130 determines whether to determine a weight coefficient (step S28). Specifically, in a case in which the OK button 440 of the weighting adjustment screen 400 is operated, it is determined that a weight coefficient is to be determined. In a case in which a weight coefficient is not to be determined, the probability calculator 130 returns to the step S22. The steps S22 to S28 are repeated until a weight coefficient is determined. In a case in which a weight coefficient is determined, the weighting adjustment process ends.

Fig. 21 is a flowchart showing a test evaluation display process. As shown in Fig. 21, in the test evaluation display process, the output displayer 150 causes the display device 260 to display the test evaluation screen 500 (step S31). Next, the confusion matrix calculator 140 determines whether a learning model is selected by the model selector 120 (step S32). In a case in which a learning model is not selected, the confusion matrix calculator 140 waits until a learning model is selected.

In a case in which a learning model is selected, the confusion matrix calculator 140 determines whether the number of selected learning models is two (step S33). In a case in which the number of learning models is two, the confusion matrix calculator 140 determines whether a difference is selected from the calculation value pull-down menu 540 (step S34). In a case in which a difference is selected, the confusion matrix calculator 140 calculates a superimposed confusion matrix based on the difference between two confusion matrices respectively corresponding to the selected two learning models (step S35), and the process proceeds to the step S41.

In a case in which the number of selected learning models is not two in the step S33, the confusion matrix calculator 140 determines whether the number of selected learning models is three or more (step S36). In a case in which a difference is not selected in the step S34 or in a case in which the number of learning models selected in the step S36 is three or more, the confusion matrix calculator 140 determines whether an average value is selected from the calculation value pull-down menu 540 (step S37). In a case in which an average value is selected, the confusion matrix calculator 140 calculates a superimposed confusion matrix based on the average value of the two or more confusion matrices respectively corresponding to the two or more selected learning models (step S38), and the process proceeds to the step S41.

In a case in which an average value is not selected in the step S37, the confusion matrix calculator 140 determines whether a variance value is selected from the calculation value pull-down menu 540 (step S39). In a case in which a variance value is selected, the confusion matrix calculator 140 calculates a superimposed confusion matrix based on the variance value of the two or more confusion matrices respectively corresponding to the two or more selected learning models (step S40), and the process proceeds to the step S41.

In the step S41, the output displayer 150 displays the superimposition screen 523 showing the superimposed confusion matrix calculated in the step S35, the step S38 or the step S40 in the test evaluation display area 520 (step S41). Thereafter, the output displayer 150 returns to the step S32.

On the other hand, in a case in which the number of learning models selected in the step S36 is not three or more, or in a case in which a variance value is not selected in the step S39, the output displayer 150 displays, in the test evaluation display area 520, the confusion matrix screen 521 showing one confusion matrix corresponding to one selected learning model or the alignment screen 522 showing a confusion matrix in which two or more confusion matrices corresponding to the two or more selected learning models are aligned (step S42). Thereafter, the output displayer 150 returns to the step S32. Thus, the alignment screen 522 and the superimposition screen 523 can be switched to be displayed.

11. Effects

In the learning model evaluation assistance device 100 according to the present embodiment, the output result of at least one learning model selected from among a plurality of learning models having the same interface is displayed on the display device 260. Therefore, the user can easily recognize the characteristics of the learning model by viewing the output result displayed on the display device 260. Thus, the characteristics of the learning model can be easily evaluated.

Two or more learning models are selected from among the plurality of learning models by the model information displayer 110. The alignment screen 522 for displaying two or more confusion matrices respectively representing the output results of two or more learning models side by side and the superimposition screen 523 for displaying a superimposed confusion matrix based on the output results of the two or more learning models, are displayed on the display device 260 by the output displayer 150 in a switchable manner. In this case, the superiority or inferiority of the two or more learning models can be easily evaluated.

Each component of a superimposed confusion matrix displayed on the superimposition screen 523 is a calculation value of the corresponding component of two or more confusion matrices. In this case, the confusion matrix displayed on the superimposition screen 523 can be easily calculated. In a case in which two learning models are selected by the model information displayer 110 from among the plurality of learning models, each component of a superimposed confusion matrix displayed on the superimposition screen 523 may be the difference between the components of the two confusion matrices corresponding to the two learning models. In this case, the superiority or inferiority of the two learning models can be evaluated more easily.

On the alignment screen 522 or the superimposition screen 523, each component of a confusion matrix is displayed with styling in a manner assigned to the range of the magnitude of the component by the output displayer 150. In this case, the superiority or inferiority of a learning model can be evaluated more intuitively. In this example, the manner is color shading. In this case, each component of the confusion matrix can be easily displayed with styling according to the magnitude of the component.

Each learning model executes a classification task of classifying an image to be classified into one of a plurality of classes. The output displayer 150 may display, on the display device 260, the weighting adjustment screen 400 for receiving adjustment of the weight coefficients set for a plurality of classes in order to adjust the output result of at least one learning model. In this case, the sensitivity for identifying a specific class in a classification task can be increased.

Specifically, the probability calculator 130 calculates the prediction probability that an image to be classified corresponds to each class based on the weight coefficient set for each class. Here, the weighting adjustment screen 400 has the weight coefficient adjustment slider 410 and the weight coefficient adjustment table 420. In the weight coefficient adjustment slider 410, the plurality of sliders 412 are arranged along the bar 411 extending in the one direction. Each slider 412 is movable in the direction parallel to the one direction. The bar 411 is sectioned into a plurality of areas respectively corresponding to a plurality of classes by the plurality of sliders 412.

In a case in which any one of the sliders 412 in the weight coefficient adjustment slider 410 moves in a direction parallel to the one direction, the probability calculator 130 changes the weight coefficients set for two classes corresponding to two areas of the bar 411 sectioned by the slider 412 according to a moving amount of the slider 412. In this case, it is possible to easily change the weight coefficient set for any class without changing the weight coefficients set for some classes.

Further, the weight coefficient adjustment table 420 describes a plurality of weight coefficients corresponding to a plurality of classes. In a case in which the value of the described weight coefficient of any one of the classes is rewritten in the weight coefficient adjustment table 420, the weight coefficient set for the class is changed to a written value to which the value is rewritten in the weight coefficient adjustment table 420 by the probability calculator 130. Further, based on the rewritten value of the weight coefficient, the weight coefficients set for all of the other classes are changed by the probability calculator 130. In this case, it is possible to easily change the weight coefficient set for any class while maintaining the correlations with the weight coefficients set for the other classes.

Based on the changed weight coefficient, the probability calculator 130 calculates the prediction probability that an image to be classified corresponds to each class. Further, the prediction probability for each class is updated by the probability calculator 130 such that the sum of the prediction probabilities calculated for all of the classes is 1. In this case, based on the changed weight coefficient, it is possible to easily update the prediction probability for each class.

In the present example, the number of the plurality of classes is three or more. In this case, the user can increase the sensitivity for identifying a specific class in a classification task of three or more classes in the similar sense to threshold value adjustment in a classification task of two classes.

Further, as an output result of at least one learning model, the screen including the detail screen call button for displaying the detail screen 300 on which detail information used at the time of creation of a learning model is described is displayed on the display device 260 by the output displayer 150. In this case, the detail screen 300 is displayed when the detail screen call button is operated. Therefore, the user can easily recognize the detail information used at the time of creation of the learning model by viewing the detail screen 300. Thus, the characteristics of the learning model can be easily evaluated.

Detail information includes information pieces of a plurality of items. In a case in which any one of information pieces of the plurality of items is selected on the detail screen 300, the display of the information piece of the selected item is expanded by the output displayer 150. In this case, the information of any item out of the detail information can be expanded to be displayed. This improves the readability of information of necessary items.

Any of information pieces of a plurality of items include information about training data, information about augmentation of image data serving as training data, information about a learning network or information about a hyperparameter. In this case, the user can easily recognize desired information from among the information about training data, the information about augmentation of image data serving as training data, the information about a learning network or the information about a hyperparameter.

12. Other Embodiments

(1) While the display device 260 displays various screens including the detail screen 300, the weighting adjustment screen 400 and the test evaluation screen 500 in the above-mentioned embodiment, the embodiment is not limited to this. Any one of the detail screen 300, the weighting adjustment screen 400 and the test evaluation screen 500 may be displayed on the display device 260, and other screens do not have to be displayed on the display device 260. Further, in a case in which the detail screen 300 is not displayed, the detail screen call button does not have to be displayed on any screen. In a case in which the weighting adjustment screen 400 is not displayed, the probability calculator 130 does not have to change the weight coefficient set for each class. In a case in which the test evaluation screen 500 is not displayed, the learning model evaluation assistance device 100 does not have to include the output displayer 150.

(2) While each component of a confusion matrix is displayed with color shading assigned to the range of the magnitude in the above-mentioned embodiment, the embodiment is not limited to this. Each component of the confusion matrix may be displayed with styling in another manner. Alternatively, each component of the confusion matrix may be displayed without any styling.

(3) While the weighting adjustment screen 400 includes both of the weight coefficient adjustment slider 410 and the weight coefficient adjustment table 420 in the above-mentioned embodiment, the embodiment is not limited to this. The weighting adjustment screen 400 may include one of the weight coefficient adjustment slider 410 and the weight coefficient adjustment table 420, and does not have to include the other.

(4) While the number of classes in classification is three or more in the above-mentioned embodiment, the embodiment is not limited to this. The number of classes in classification may be two.

## 13. Overview of Embodiments

(Item 1) A learning model evaluation assistance device according to one aspect of the present disclosure includes a model information displayer that displays a plurality of learning models being stored in a predetermined storage area and having a same interface on a display device in a selectable manner, a model selector that selects at least one learning model from among the plurality of learning models displayed on the display device, and an output displayer that displays an output result provided by the at least one learning model on the display device.

With this learning model evaluation assistance device, the output result of at least one learning model selected from among the plurality of learning models having the same interface is displayed on the display device. Therefore, the user can easily recognize the characteristics of the learning model by viewing the output result displayed on the display device. Thus, the characteristics of the learning model can be easily evaluated.

(Item 2) The learning model evaluation assistance device according to item 1, wherein the model selector may select two or more learning models from among the plurality of learning models, and the output displayer may display, on the display device, in a selectable manner, an alignment screen in which two or more confusion matrices respectively representing output results of the two or more learning models side by side, and a superimposition screen in which a confusion matrix based on the output results of the two or more learning models is displayed.

In this case, the superiority or inferiority of the two or more learning models can be easily evaluated.

(Item 3) The learning model evaluation assistance device according to item 2, wherein each component of the confusion matrix displayed on the superimposition screen may be a calculation value of the component of the two or more confusion matrices.

In this case, the confusion matrix displayed on the superimposition screen can be easily calculated.

(Item 4) The learning model evaluation assistance device according to item 3, wherein the model selector may select two learning models from among the plurality of learning models, and each component of the confusion matrix displayed on the superimposition screen may be a difference value between two confusion matrices respectively corresponding to the two learning models in regard to the component.

In this case, the superiority or inferiority of the two learning models can be evaluated more easily.

(Item 5) The learning model evaluation assistance device according to any one of items 2 to 4, wherein in the alignment screen or the superimposition screen, the output displayer may display each component of a confusion matrix with styling in a manner assigned to a range of magnitude.

In this case, the superiority or inferiority of a learning model can be evaluated more intuitively.

(Item 6) The learning model evaluation assistance device according to item 5, wherein the manner may be color shading.

In this case, each component of a confusion matrix can be easily displayed with styling according to the magnitude of the component.

(Item 7) The learning model evaluation assistance device according to any one of items 1 to 6, wherein each learning model may execute a classification task of classifying an image to be classified into any one of a plurality of classes, and the output displayer may display, on the display device, a weighting adjustment screen that receives adjustment of a weight coefficient set for the plurality of classes in order to adjust an output result provided by the at least one learning model.

In this case, the sensitivity for identifying a specific class in a classification task can be increased.

(Item 8) The learning model evaluation assistance device according to item 7, may further include a probability calculator that calculates, based on a weight coefficient set for each class, a prediction probability that an image to be classified corresponds to each class, wherein the weighting adjustment screen may have a first GUI (Graphical User Interface) that has a bar extending in one direction and a plurality of sliders being aligned along the bar and being movable in a direction parallel to the one direction, with the bar being sectioned by the plurality of sliders into a plurality of areas respectively corresponding to the plurality of classes, and the probability calculator, in a case in which any one slider moves in a direction parallel to the one direction in the first GUI, may change weight coefficients set for two classes respectively corresponding to two areas of the bar sectioned by the slider according to a moving amount of the slider.

In this case, it is possible to easily change the weight coefficient set for any class without changing the weight coefficients set for some classes.

(Item 9) The learning model evaluation assistance device according to item 7 or 8, may further include a probability calculator that calculates, based on a weight coefficient set for each class, a prediction probability that an image to be classified corresponds to each class, wherein the weighting adjustment screen may include a second GUI in which a plurality of weight coefficients respectively corresponding to the plurality of classes are described, and the probability calculator, in a case in which a value of a weight coefficient for any described class is rewritten in the second GUI, may change a weight coefficient set for the class to a value that has been rewritten in the second GUI and changes weight coefficients set for all of other classes based on the rewritten weight coefficient.

In this case, it is possible to easily change the weight coefficient set for any class while maintaining the correlations with the weight coefficients set for the other classes.

(Item 10) The learning model evaluation assistance device according to item 8 or 9, wherein the probability calculator may calculate a prediction probability that an image to be classified corresponds to each class based on a changed weight coefficient, and may update a prediction probability for each class such that a sum of prediction probabilities that have been calculated for all of classes is a certain value.

In this case, based on the changed weight coefficient, it is possible to easily update the prediction probability for each class.

(Item 11) The learning model evaluation assistance device according to any one of items 7 to 10, wherein a count of the plurality of classes may be equal to or larger than three.

In this case, the user can increase the sensitivity for identifying a specific class in a classification task of three or more classes in the similar sense to threshold value adjustment in a classification task of two classes.

(Item 12) The learning model evaluation assistance device according to any one of items 1 to 11, wherein the output displayer may display, as an output result provided by the at least one learning model, on the display device, a screen including a detail screen call button for displaying a detail screen in which detail information used at a time of creation of the learning model.

In this case, the detail screen is displayed when the detail screen call button is operated. Therefore, the user can easily recognize the detail information used at the time of creation of a learning model by viewing the detail screen. Thus, the characteristics of the learning model can be easily evaluated.

(Item 13) The learning model evaluation assistance device according to item 12, wherein the detail information may include information of a plurality of items, and the output displayer, in a case in which information of any one of the plurality of items is selected in the detail screen, may expand display of the information of a selected item.

In this case, the information of any item out of the detail information can be expanded to be displayed. This improves the readability of information of necessary items.

(Item 14) The learning model evaluation assistance device according to item 13, wherein information of any one of the plurality of items may include information about training data, information about augmentation of image data serving as the training data, information about a learning network and information about a hyperparameter.

In this case, the user can easily recognize desired information from among the information about training data, the information about augmentation of image data serving as training data, the information about a learning network or the information about a hyperparameter.

(Item 15) A learning model evaluation assistance program according to another aspect of the present disclosure causes a computer to execute a model information display process of displaying, on a display device, in a selectable manner, a plurality of learning models being stored in a predetermined storage area and having a same interface, a model selection process of selecting at least one learning model from among the plurality of learning models displayed on the display device, and an output display process of displaying, on the display device, an output result provided by the at least one learning model.

With this learning model evaluation assistance program, the output result of at least one learning model selected from among the plurality of learning models having the same interface is displayed on the display device. Therefore, the user can easily recognize the characteristics of the learning model by viewing the output result displayed on the display device. Thus, the characteristics of the learning model can be easily evaluated.

14. Correspondences Between Constituent Elements in Claims and Parts in Preferred Embodiments

In the following paragraphs, non-limiting examples of correspondences between various elements recited in the claims below and those described above with respect to various preferred embodiments of the present disclosure are explained. As each of constituent elements recited in the claims, various other elements having configurations or functions described in the claims can be also used.

In the above-mentioned embodiment, the storage device 240 is an example of a storage area, the display device 260 is an example of a display device, the model information displayer 110 is an example of a model information displayer, and the model selector 120 is an example of a model selector. The output displayer 150 is an example of an output displayer, the learning model evaluation assistance device 100 is an example of a learning model evaluation assistance device, the alignment screen 522 is an example of an alignment screen, and the superimposition screen 523 is an example of a superimposition screen.

The weighting adjustment screen 400 is an example of a weighting adjustment screen, the probability calculator 130 is an example of a probability calculator, the bar 411 is an example of a bar, the slider 412 is an example of a slider, and the weight coefficient adjustment slider 410 is an example of a first GUI. The weight coefficient adjustment table 420 is an example of a second GUI, the detail screen 300 is an example of a detail screen, and the detail screen call buttons 31a, 41a, 511 are examples of a detail screen call button.

While preferred embodiments of the present disclosure have been described above, it is to be understood that variations and modifications will be apparent to those skilled in the art without departing the scope and spirit of the present disclosure. The scope of the present disclosure, therefore, is to be determined solely by the following claims.

## Claims

**1.** A learning model evaluation assistance device comprising:

a model information displayer that displays a plurality of learning models being stored in a predetermined storage area and having a same interface on a display device in a selectable manner;
a model selector that selects at least one learning model from among the plurality of learning models displayed on the display device; and
an output displayer that displays an output result provided by the at least one learning model on the display device.

**2.** The learning model evaluation assistance device according to claim 1, wherein

the model selector selects two or more learning models from among the plurality of learning models, and
the output displayer displays, on the display device, in a selectable manner, an alignment screen in which two or more confusion matrices respectively representing output results of the two or more learning models side by side, and a superimposition screen in which a confusion matrix based on the output results of the two or more learning models is displayed.

**3.** The learning model evaluation assistance device according to claim 2, wherein
each component of the confusion matrix displayed on the superimposition screen is a calculation value of the component of the two or more confusion matrices.

**4.** The learning model evaluation assistance device according to claim 3, wherein

the model selector selects two learning models from among the plurality of learning models, and
each component of the confusion matrix displayed on the superimposition screen is a difference value between two confusion matrices respectively corresponding to the two learning models in regard to the component.

**5.** The learning model evaluation assistance device according to any one of claims 2 to 4, wherein
in the alignment screen or the superimposition screen, the output displayer displays each component of a confusion matrix with styling in a manner assigned to a range of magnitude.

**6.** The learning model evaluation assistance device according to claim 5, wherein
the manner is color shading.

**7.** The learning model evaluation assistance device according to any one of claims 1 to 6, wherein

each learning model executes a classification task of classifying an image to be classified into any one of a plurality of classes, and
the output displayer displays, on the display device, a weighting adjustment screen that receives adjustment of a weight coefficient set for the plurality of classes in order to adjust an output result provided by the at least one learning model.

**8.** The learning model evaluation assistance device according to claim 7, further comprising a probability calculator that calculates, based on a weight coefficient set for each class, a prediction probability that an image to be classified corresponds to each class, wherein

the weighting adjustment screen has a first GUI (Graphical User Interface) that has a bar extending in one direction and a plurality of sliders being aligned along the bar and being movable in a direction parallel to the one direction, with the bar being sectioned by the plurality of sliders into a plurality of areas respectively corresponding to the plurality of classes, and
the probability calculator, in a case in which any one slider moves in a direction parallel to the one direction in the first GUI, changes weight coefficients set for two classes respectively corresponding to two areas of the bar sectioned by the slider according to a moving amount of the slider.

**9.** The learning model evaluation assistance device according to claim 7 or 8, further comprising a probability calculator that calculates, based on a weight coefficient set for each class, a prediction probability that an image to be classified corresponds to each class, wherein

the weighting adjustment screen includes a second GUI in which a plurality of weight coefficients respectively corresponding to the plurality of classes are described, and
the probability calculator, in a case in which a value of a weight coefficient for any described class is rewritten in the second GUI, changes a weight coefficient set for the class to a value that has been rewritten in the second GUI and changes weight coefficients set for all of other classes based on the rewritten weight coefficient.

**10.** The learning model evaluation assistance device according to claim 8 or 9, wherein
the probability calculator calculates a prediction probability that an image to be classified corresponds to each class based on a changed weight coefficient, and updates a prediction probability for each class such that a sum of prediction probabilities that have been calculated for all of classes is a certain value.

**11.** The learning model evaluation assistance device according to any one of claims 7 to 10, wherein
a count of the plurality of classes is equal to or larger than three.

**12.** The learning model evaluation assistance device according to any one of claims 1 to 11, wherein
the output displayer displays, as an output result provided by the at least one learning model, on the display device, a screen including a detail screen call button for displaying a detail screen in which detail information used at a time of creation of the learning model.

**13.** The learning model evaluation assistance device according to claim 12, wherein

the detail information includes information of a plurality of items, and
the output displayer, in a case in which information of any one of the plurality of items is selected in the detail screen, expands display of the information of a selected item.

**14.** The learning model evaluation assistance device according to claim 13, wherein
information of any one of the plurality of items includes information about training data, information about augmentation of image data serving as the training data, information about a learning network and information about a hyperparameter.

**15.** A learning model evaluation assistance program, causing a computer to execute:

a model information display process of displaying, on a display device, in a selectable manner, a plurality of learning models being stored in a predetermined storage area and having a same interface;
a model selection process of selecting at least one learning model from among the plurality of learning models displayed on the display device; and

an output display process of displaying, on the display device, an output result provided by the at least one learning model.

FIG.1

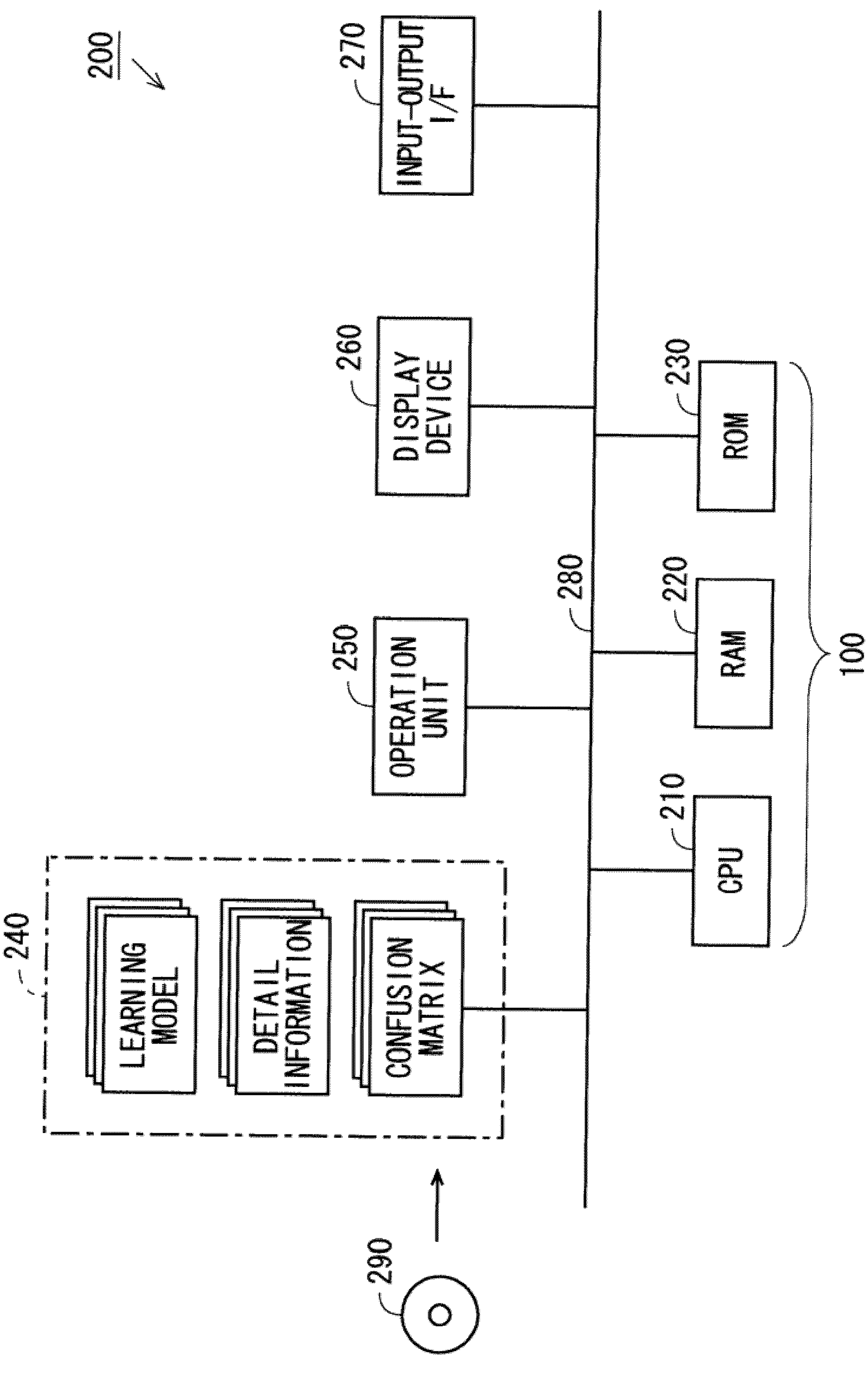
200
INPUT-OUTPUT I/F
270
DISPLAY DEVICE
260
OPERATION UNIT
250
280
ROM
230
RAM
220
CPU
210
100
240
LEARNING MODEL
DETAIL INFORMATION
CONFUSION MATRIX
290

FIG.2

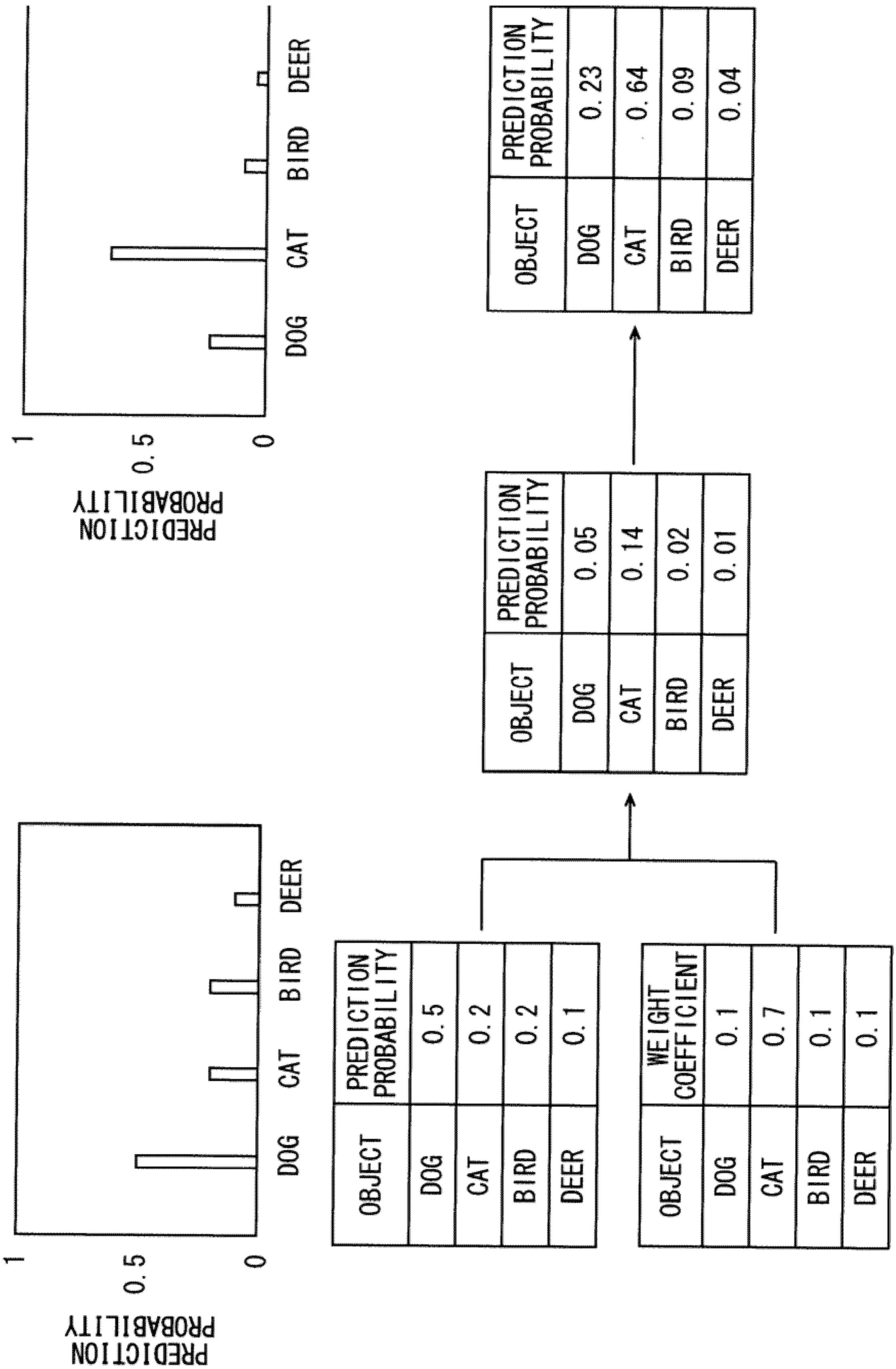
PREDICTION PROBABILITY
1
0.5
0
DOG
CAT
BIRD
DEER
OBJECT
PREDICTION PROBABILITY
DOG
0.5
CAT
0.2
BIRD
0.2
DEER
0.1
OBJECT
WEIGHT COEFFICIENT
DOG
0.1
CAT
0.7
BIRD
0.1
DEER
0.1
OBJECT
PREDICTION PROBABILITY
DOG
0.05
CAT
0.14
BIRD
0.02
DEER
0.01
OBJECT
PREDICTION PROBABILITY
DOG
0.23
CAT
0.64
BIRD
0.09
DEER
0.04
PREDICTION PROBABILITY
1
0.5
0
DOG
CAT
BIRD
DEER

FIG.3

| | | CLASSIFICATION RESULTS | | | |
|---|---|---|---|---|---|
| | | DOG | CAT | BIRD | DEER |
| LABEL INFORMATION | DOG | 3 | 0 | 0 | 0 |
| | CAT | 0 | 3 | 0 | 0 |
| | BIRD | 1 | 0 | 2 | 0 |
| | DEER | 0 | 0 | 0 | 3 |

FIG.4

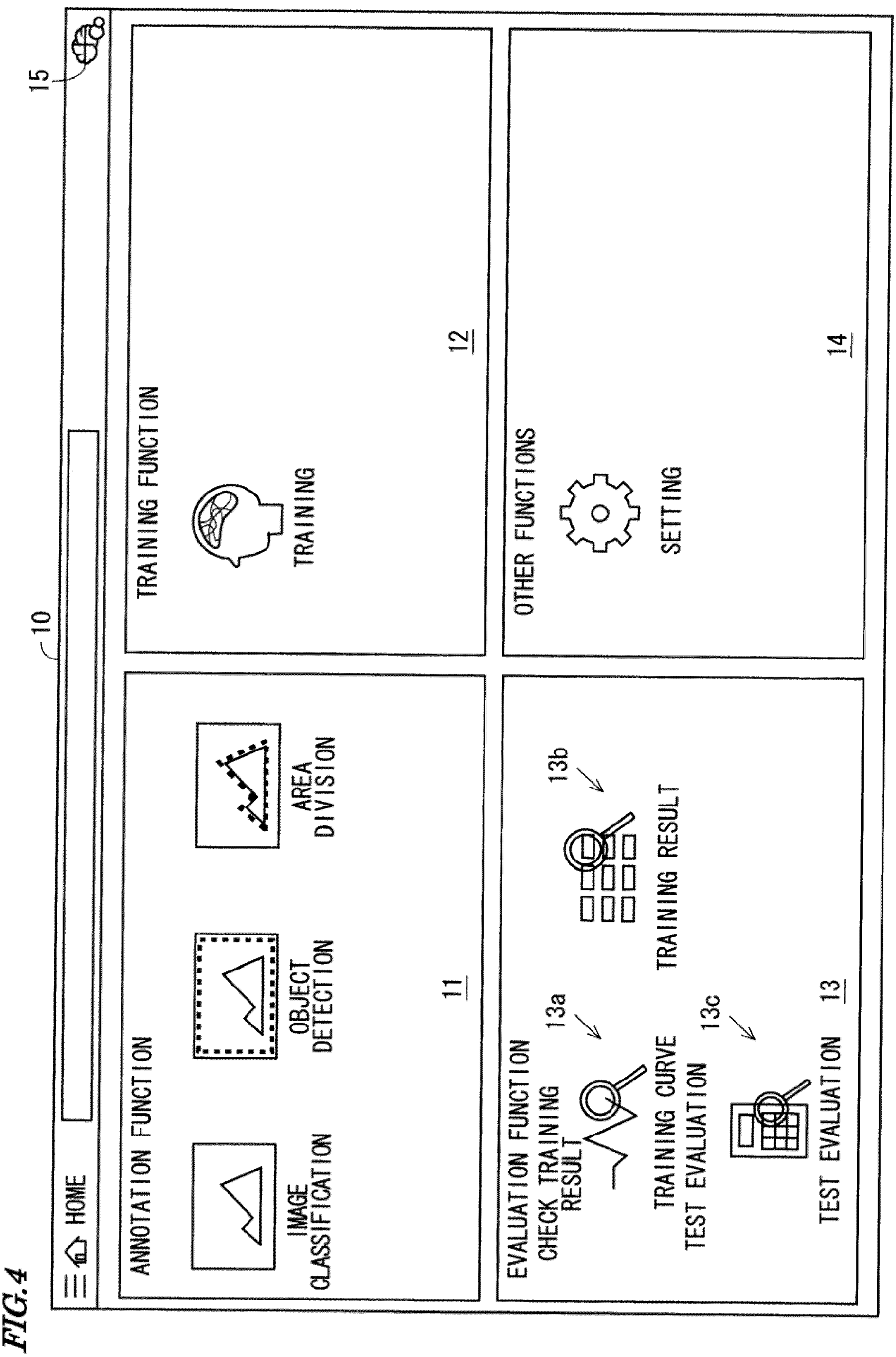

15
10
HOME
ANNOTATION FUNCTION
IMAGE CLASSIFICATION
OBJECT DETECTION
AREA DIVISION
11
TRAINING FUNCTION
TRAINING
12
EVALUATION FUNCTION
CHECK TRAINING RESULT
13a
TRAINING CURVE
13b
TRAINING RESULT
13c
TEST EVALUATION
TEST EVALUATION
13
OTHER FUNCTIONS
SETTING
14

*FIG.5*

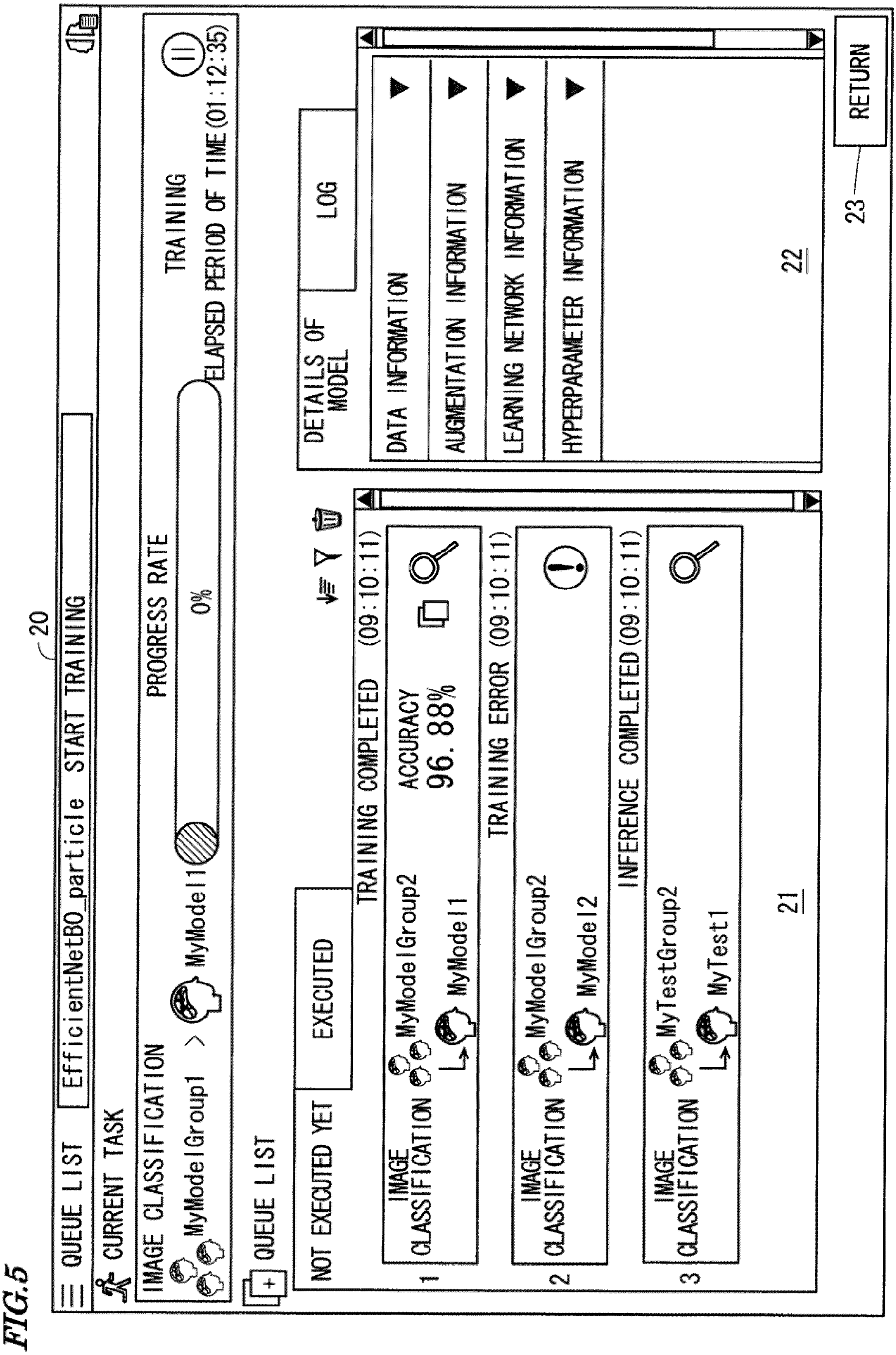

20
QUEUE LIST
EfficientNetBO_particle START TRAINING
CURRENT TASK
IMAGE CLASSIFICATION
MyModelGroup1 > MyModel1
PROGRESS RATE
0%
TRAINING
ELAPSED PERIOD OF TIME (01:12:35)
QUEUE LIST
NOT EXECUTED YET
EXECUTED
1
IMAGE CLASSIFICATION
MyModelGroup2
MyModel1
TRAINING COMPLETED (09:10:11)
ACCURACY
96.88%
2
IMAGE CLASSIFICATION
MyModelGroup2
MyModel2
TRAINING ERROR (09:10:11)
3
IMAGE CLASSIFICATION
MyTestGroup2
MyTest1
INFERENCE COMPLETED (09:10:11)
21
DETAILS OF MODEL
LOG
DATA INFORMATION
AUGMENTATION INFORMATION
LEARNING NETWORK INFORMATION
HYPERPARAMETER INFORMATION
22
23
RETURN

*FIG.6*

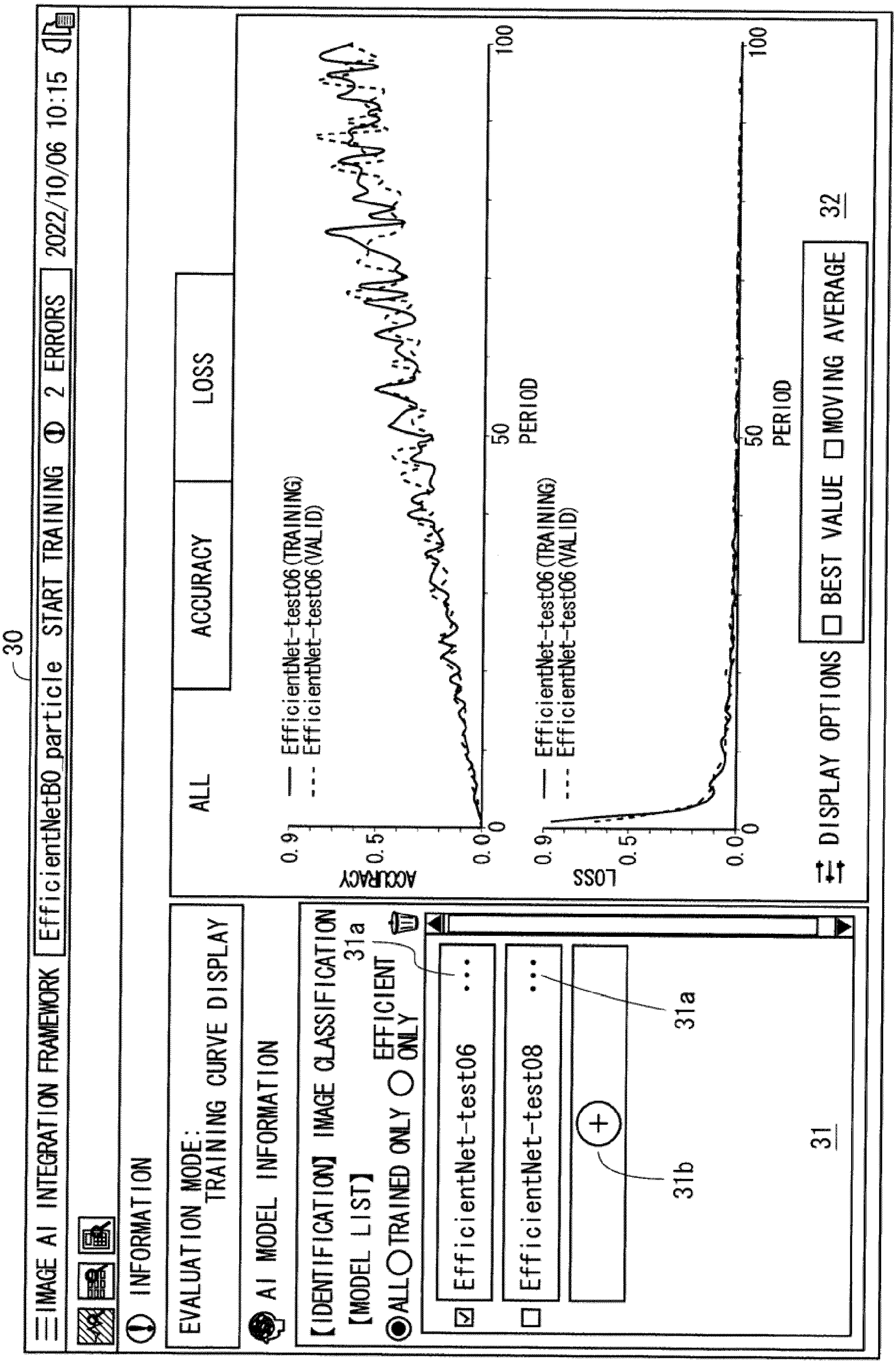
30
IMAGE AI INTEGRATION FRAMEWORK
EfficientNetB0_particle
START TRAINING
2 ERRORS
2022/10/06 10:15
INFORMATION
EVALUATION MODE: TRAINING CURVE DISPLAY
AI MODEL INFORMATION
【IDENTIFICATION】 IMAGE CLASSIFICATION
【MODEL LIST】
ALL
TRAINED ONLY
EFFICIENT ONLY
31a
EfficientNet-test06
EfficientNet-test08
31a
31b
31
ALL
ACCURACY
LOSS
EfficientNet-test06 (TRAINING)
EfficientNet-test06 (VALID)
ACCURACY
0.9
0.5
0.0
0
50
100
PERIOD
LOSS
0.9
0.5
0.0
0
50
100
PERIOD
DISPLAY OPTIONS
BEST VALUE
MOVING AVERAGE
32

FIG. 7

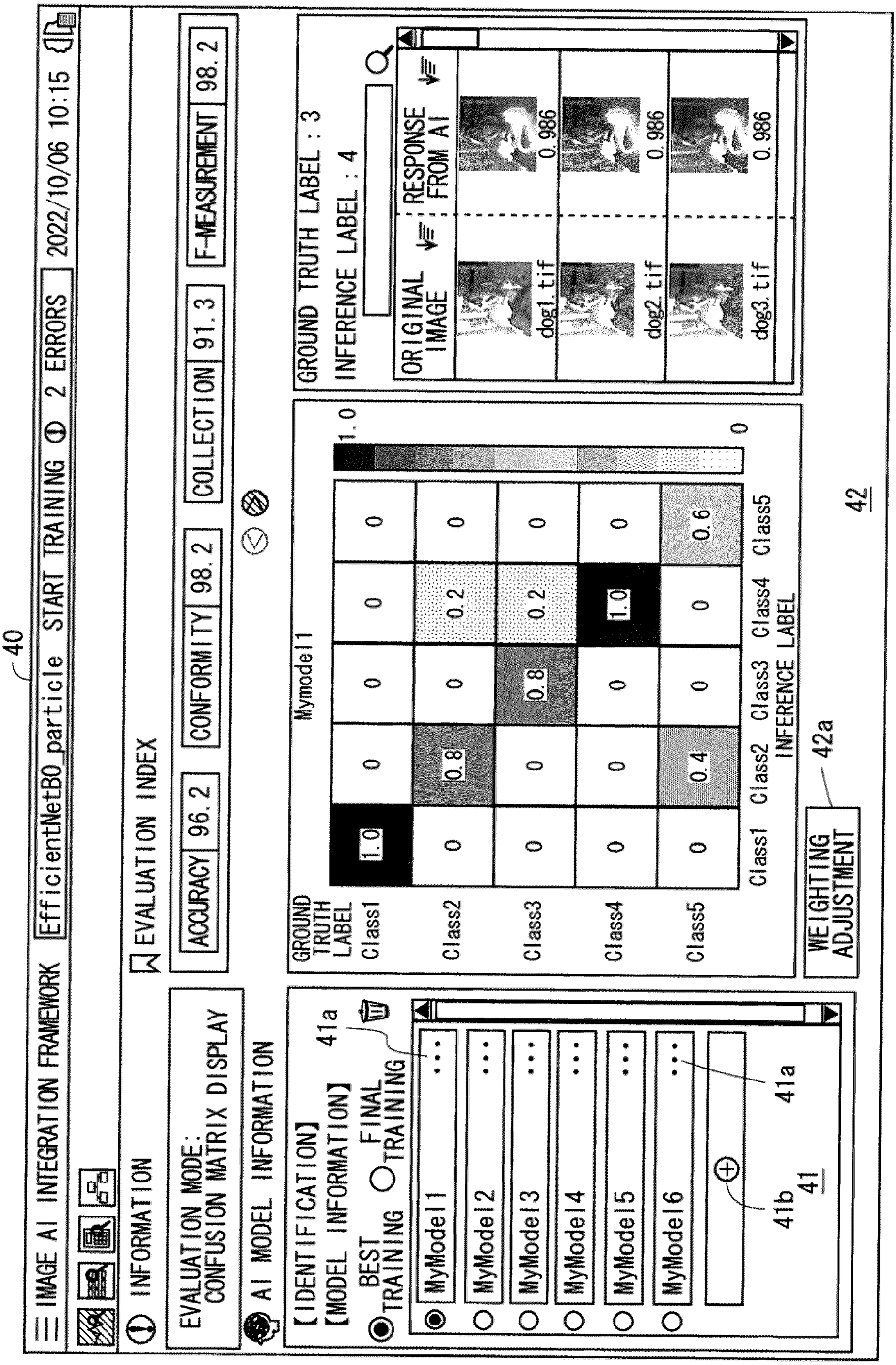
40
IMAGE AI INTEGRATION FRAMEWORK
EfficientNetB0_particle
START TRAINING
2 ERRORS
2022/10/06 10:15
INFORMATION
EVALUATION MODE:
CONFUSION MATRIX DISPLAY
EVALUATION INDEX
ACCURACY 96.2
CONFORMITY 98.2
COLLECTION 91.3
F-MEASUREMENT 98.2
AI MODEL INFORMATION
【IDENTIFICATION】
【MODEL INFORMATION】
BEST TRAINING
FINAL TRAINING
41a
MyModel1
MyModel2
MyModel3
MyModel4
MyModel5
MyModel6
41b
41a
41
Mymodel1
GROUND TRUTH LABEL
Class1
Class2
Class3
Class4
Class5
1.0
0.8
0.8
0.2
0.2
1.0
0.4
0.6
INFERENCE LABEL
1.0
0
WEIGHTING ADJUSTMENT
42a
42
GROUND TRUTH LABEL : 3
INFERENCE LABEL : 4
ORIGINAL IMAGE
RESPONSE FROM AI
dog1.tif
dog2.tif
dog3.tif
0.986
0.986
0.986

*FIG.8*

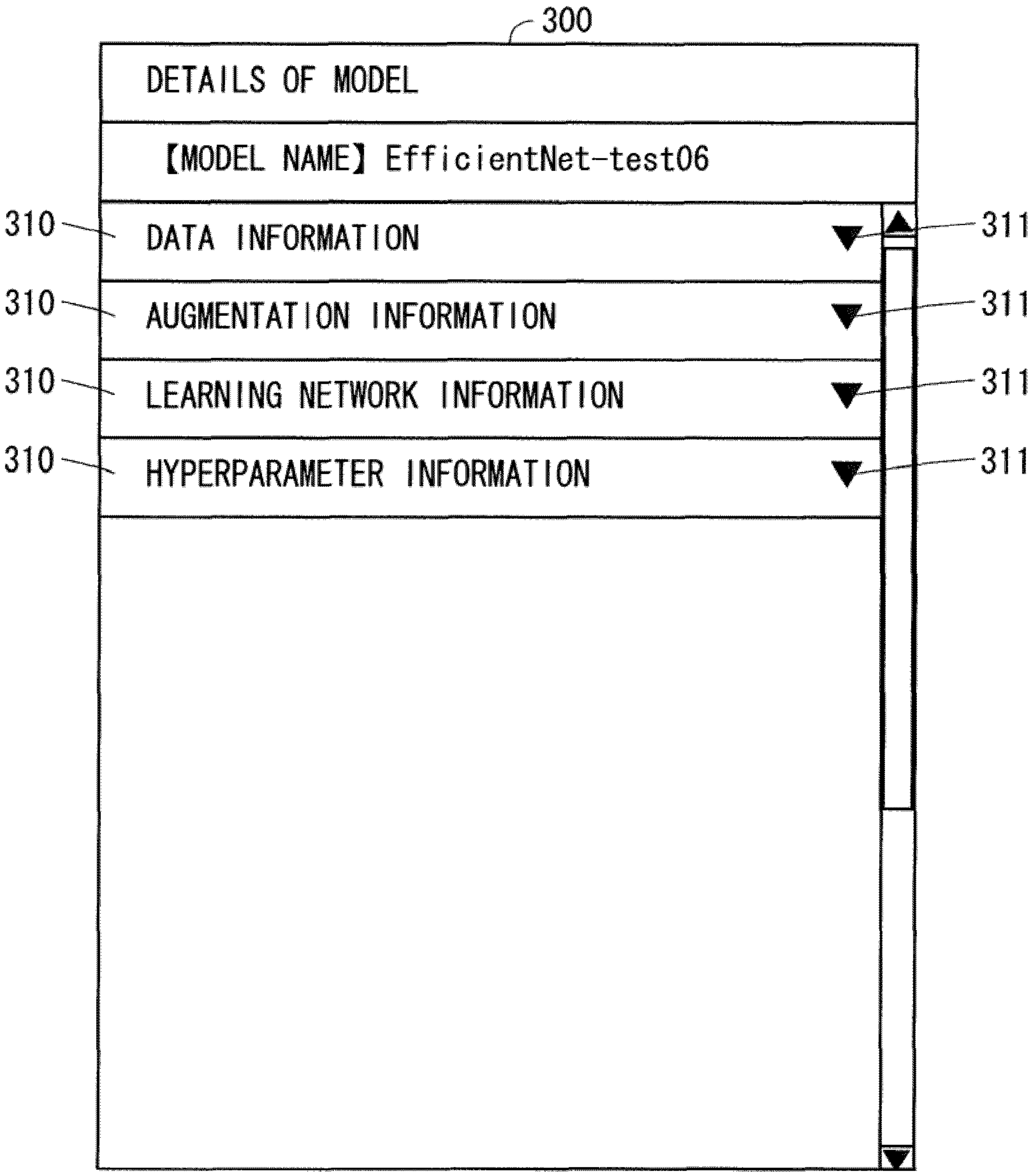
300
DETAILS OF MODEL
【MODEL NAME】 EfficientNet-test06
310
DATA INFORMATION
311
310
AUGMENTATION INFORMATION
311
310
LEARNING NETWORK INFORMATION
311
310
HYPERPARAMETER INFORMATION
311

*FIG.9*

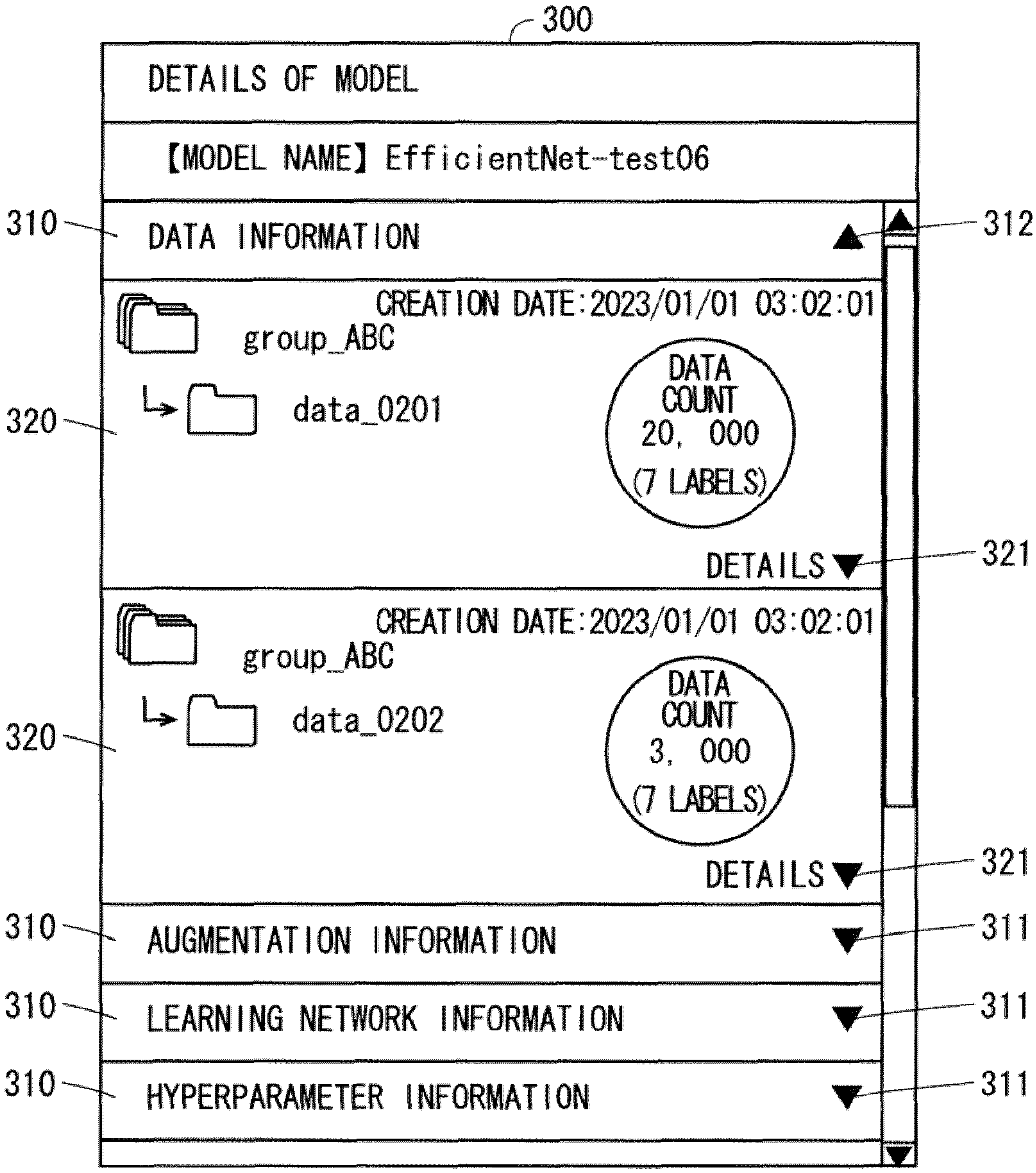
300
DETAILS OF MODEL
【MODEL NAME】 EfficientNet-test06
310
DATA INFORMATION
312
CREATION DATE:2023/01/01 03:02:01
group_ABC
320
data_0201
DATA COUNT 20, 000 (7 LABELS)
DETAILS
321
CREATION DATE:2023/01/01 03:02:01
group_ABC
320
data_0202
DATA COUNT 3, 000 (7 LABELS)
DETAILS
321
310
AUGMENTATION INFORMATION
311
310
LEARNING NETWORK INFORMATION
311
310
HYPERPARAMETER INFORMATION
311

*FIG.10*

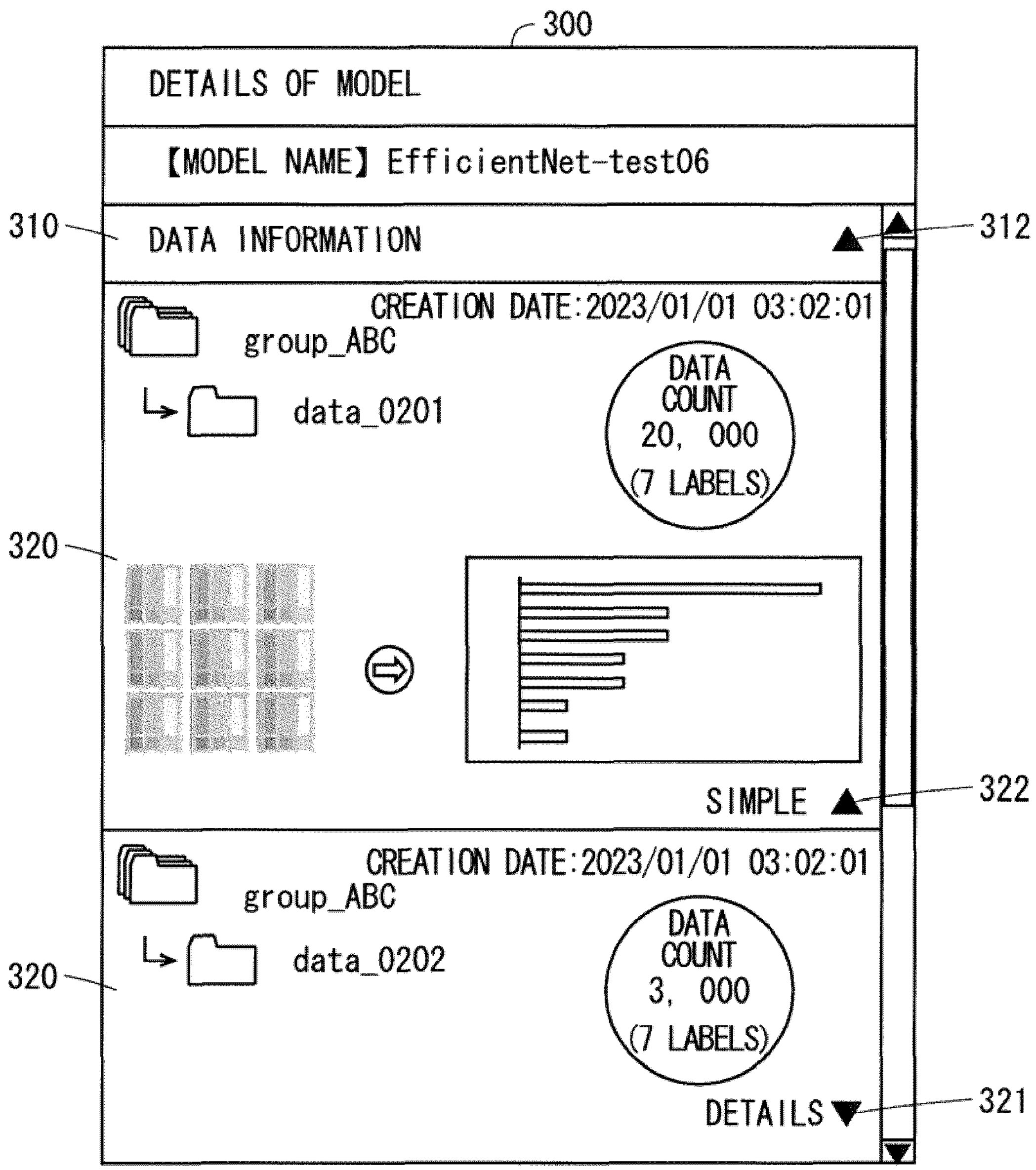
300
DETAILS OF MODEL
【MODEL NAME】EfficientNet-test06
310
DATA INFORMATION
312
CREATION DATE:2023/01/01 03:02:01
group_ABC
data_0201
DATA COUNT 20, 000 (7 LABELS)
320
SIMPLE
322
CREATION DATE:2023/01/01 03:02:01
group_ABC
data_0202
DATA COUNT 3, 000 (7 LABELS)
320
DETAILS
321

*FIG.11*

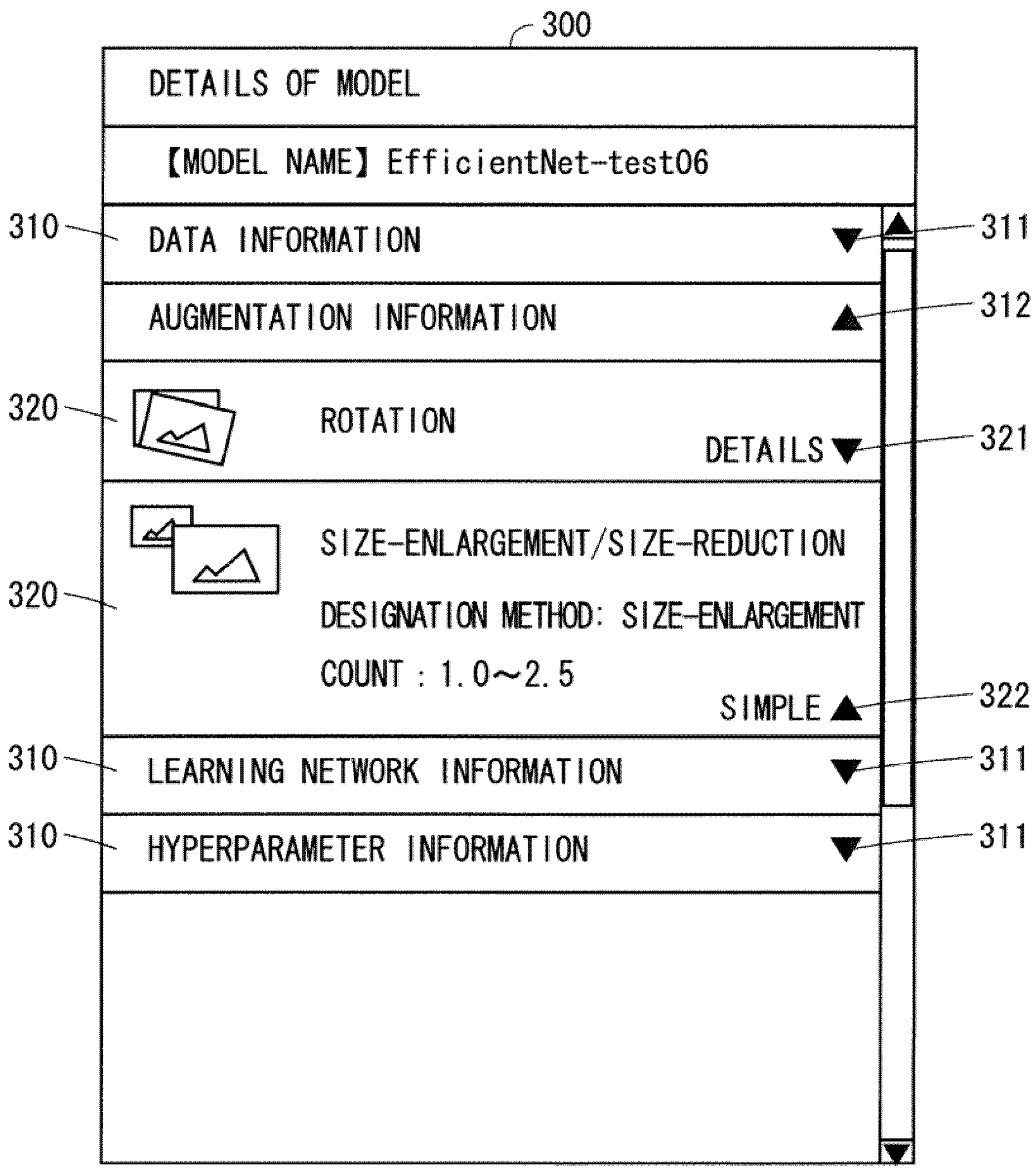
300
DETAILS OF MODEL
【MODEL NAME】EfficientNet-test06
310
DATA INFORMATION
311
AUGMENTATION INFORMATION
312
320
ROTATION
DETAILS
321
SIZE-ENLARGEMENT/SIZE-REDUCTION
DESIGNATION METHOD: SIZE-ENLARGEMENT
COUNT : 1.0～2.5
SIMPLE
322
LEARNING NETWORK INFORMATION
HYPERPARAMETER INFORMATION

FIG.12

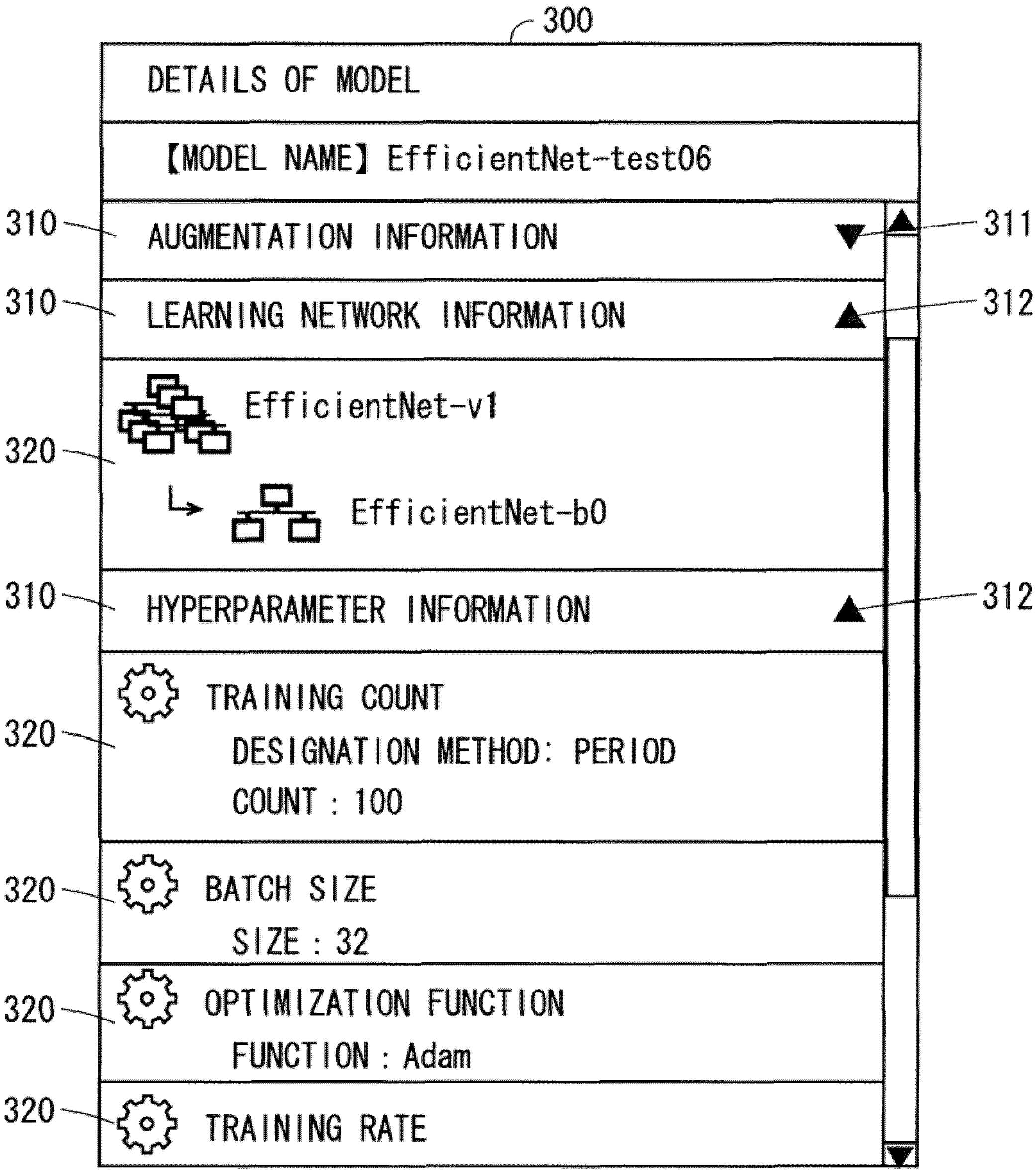
300
DETAILS OF MODEL
【MODEL NAME】 EfficientNet-test06
310
AUGMENTATION INFORMATION
311
310
LEARNING NETWORK INFORMATION
312
EfficientNet-v1
320
EfficientNet-b0
310
HYPERPARAMETER INFORMATION
312
TRAINING COUNT
320
DESIGNATION METHOD: PERIOD
COUNT : 100
320
BATCH SIZE
SIZE : 32
320
OPTIMIZATION FUNCTION
FUNCTION : Adam
320
TRAINING RATE

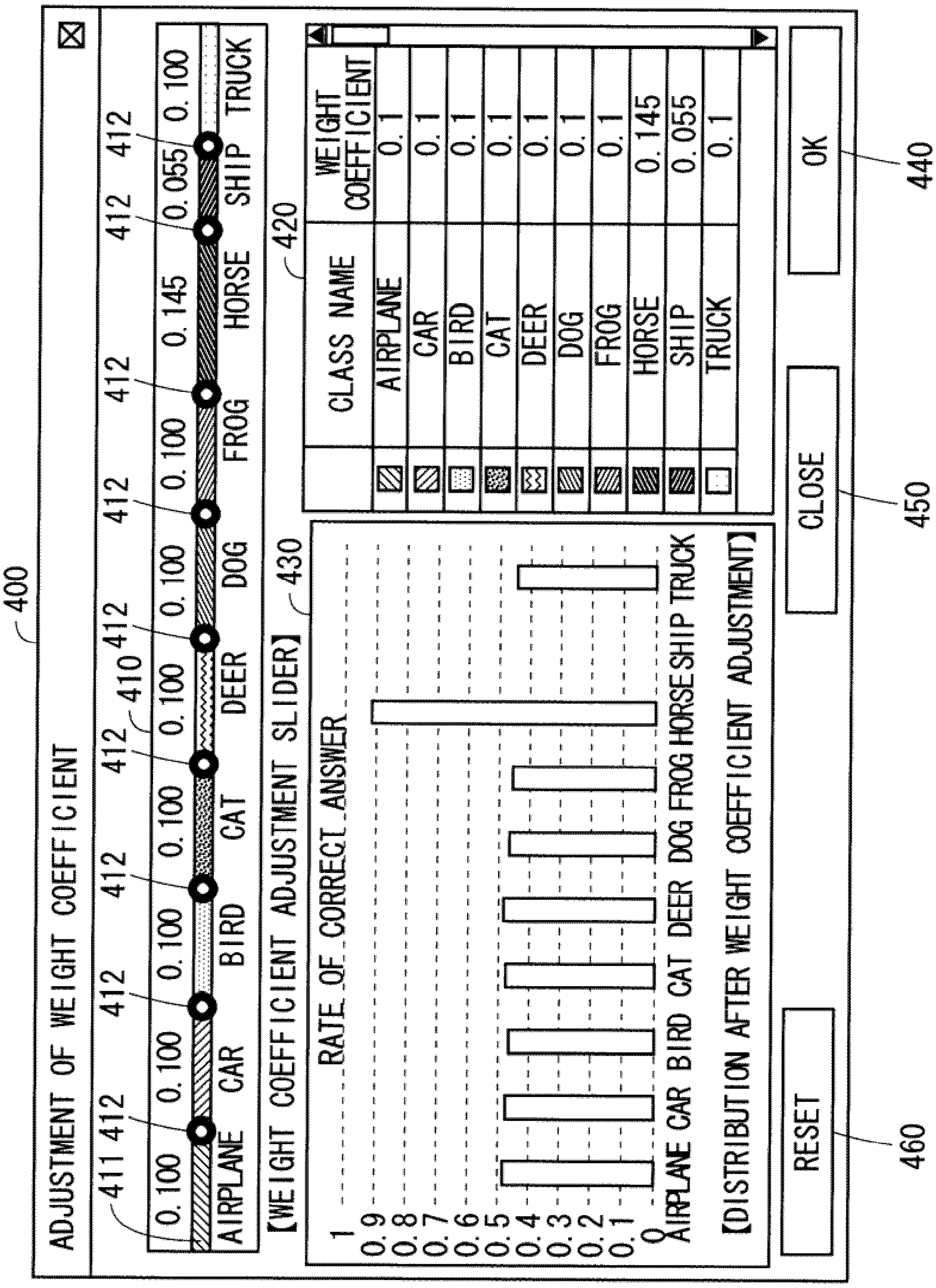
400
ADJUSTMENT OF WEIGHT COEFFICIENT
411
412
410
0.100
0.145
0.055
AIRPLANE
CAR
BIRD
CAT
DEER
DOG
FROG
HORSE
SHIP
TRUCK
【WEIGHT COEFFICIENT ADJUSTMENT SLIDER】
430
RATE OF CORRECT ANSWER
1
0.9
0.8
0.7
0.6
0.5
0.4
0.3
0.2
0.1
0
【DISTRIBUTION AFTER WEIGHT COEFFICIENT ADJUSTMENT】
420
CLASS NAME
WEIGHT COEFFICIENT
0.1
0.145
0.055
RESET
CLOSE
OK
460
450
440

FIG.13

FIG.14

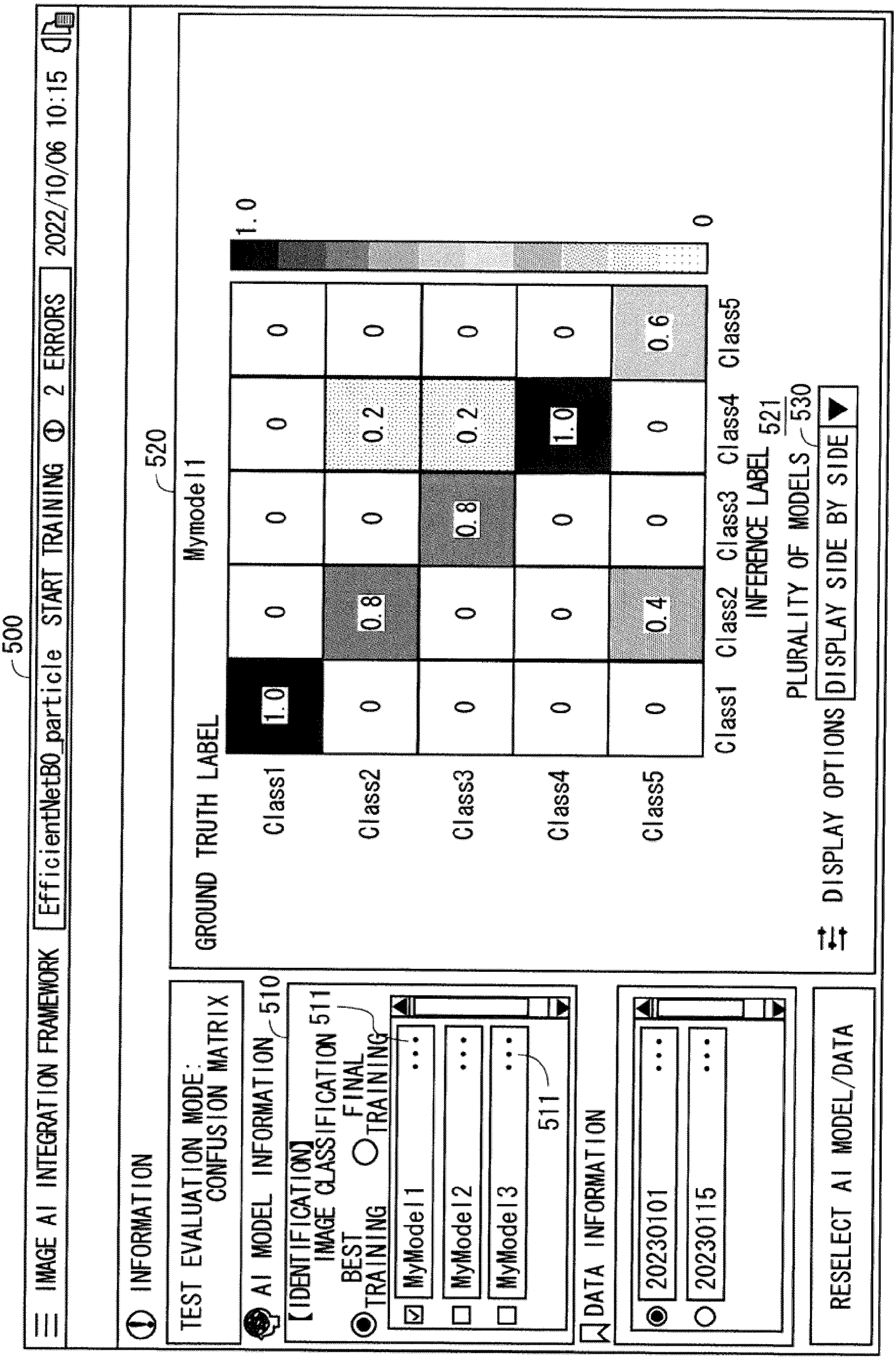
500
IMAGE AI INTEGRATION FRAMEWORK
EfficientNetB0_particle
START TRAINING
2 ERRORS
2022/10/06 10:15
INFORMATION
TEST EVALUATION MODE: CONFUSION MATRIX
AI MODEL INFORMATION
510
【IDENTIFICATION】 IMAGE CLASSIFICATION
511
BEST TRAINING
FINAL TRAINING
MyModel1
MyModel2
MyModel3
511
DATA INFORMATION
20230101
20230115
RESELECT AI MODEL/DATA
520
Mymodel1
GROUND TRUTH LABEL
Class1
Class2
Class3
Class4
Class5
1.0
0.8
0.4
0.8
0.2
0.2
1.0
0.6
0
1.0
0
INFERENCE LABEL
521
DISPLAY OPTIONS
PLURALITY OF MODELS
530
DISPLAY SIDE BY SIDE

*FIG.15*

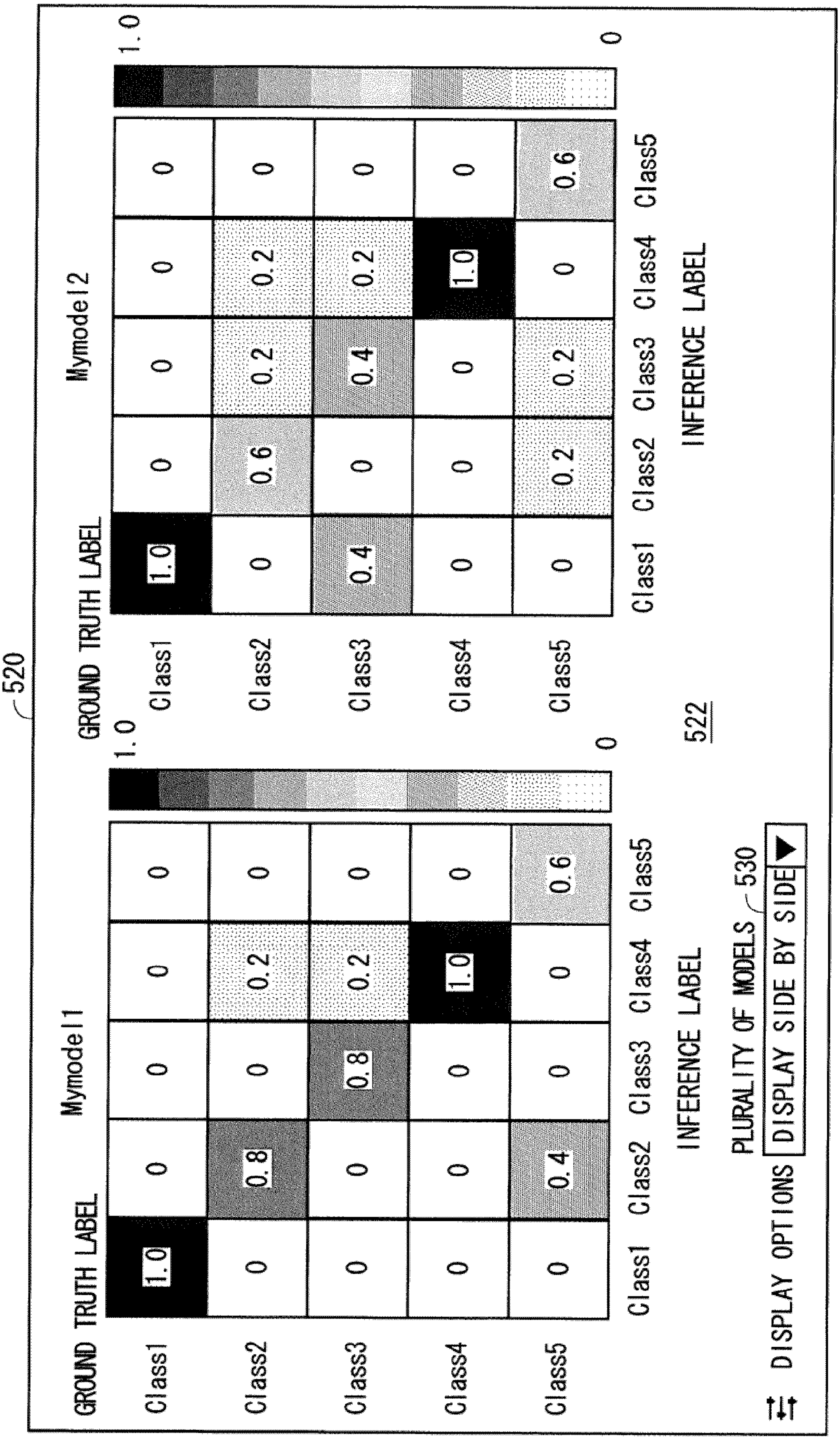
520
Mymodel1
GROUND TRUTH LABEL
Class1
Class2
Class3
Class4
Class5
1.0
0.8
0.4
0.2
0.6
0
INFERENCE LABEL
Mymodel2
522
PLURALITY OF MODELS
530
DISPLAY OPTIONS
DISPLAY SIDE BY SIDE

*FIG.16*

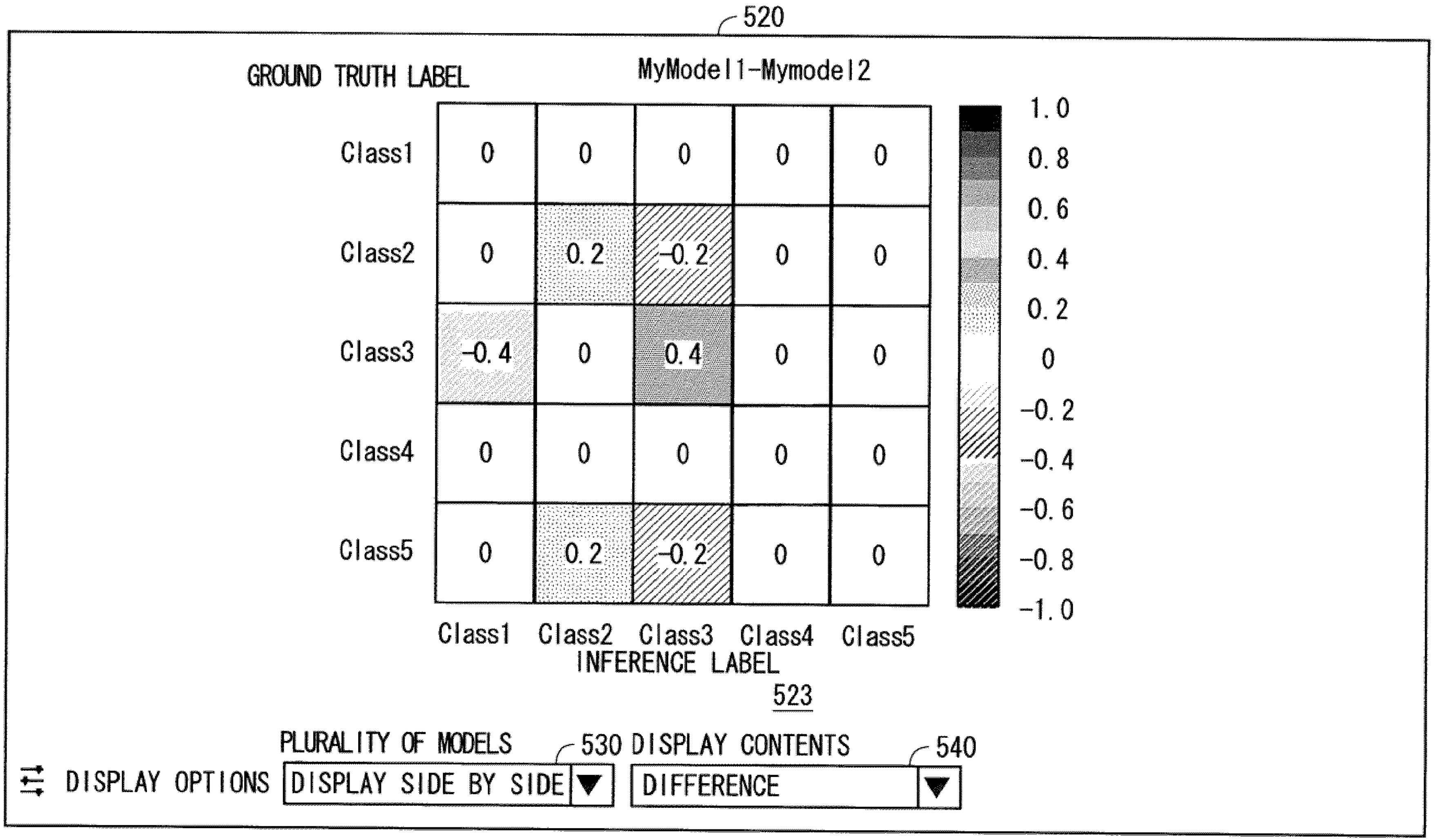
520
GROUND TRUTH LABEL
MyModel1-Mymodel2
Class1
Class2
Class3
Class4
Class5
0 0 0 0 0
0 0.2 -0.2 0 0
-0.4 0 0.4 0 0
0 0 0 0 0
0 0.2 -0.2 0 0
1.0
0.8
0.6
0.4
0.2
0
-0.2
-0.4
-0.6
-0.8
-1.0
Class1 Class2 Class3 Class4 Class5
INFERENCE LABEL
523
PLURALITY OF MODELS
530
DISPLAY CONTENTS
540
DISPLAY OPTIONS
DISPLAY SIDE BY SIDE
DIFFERENCE

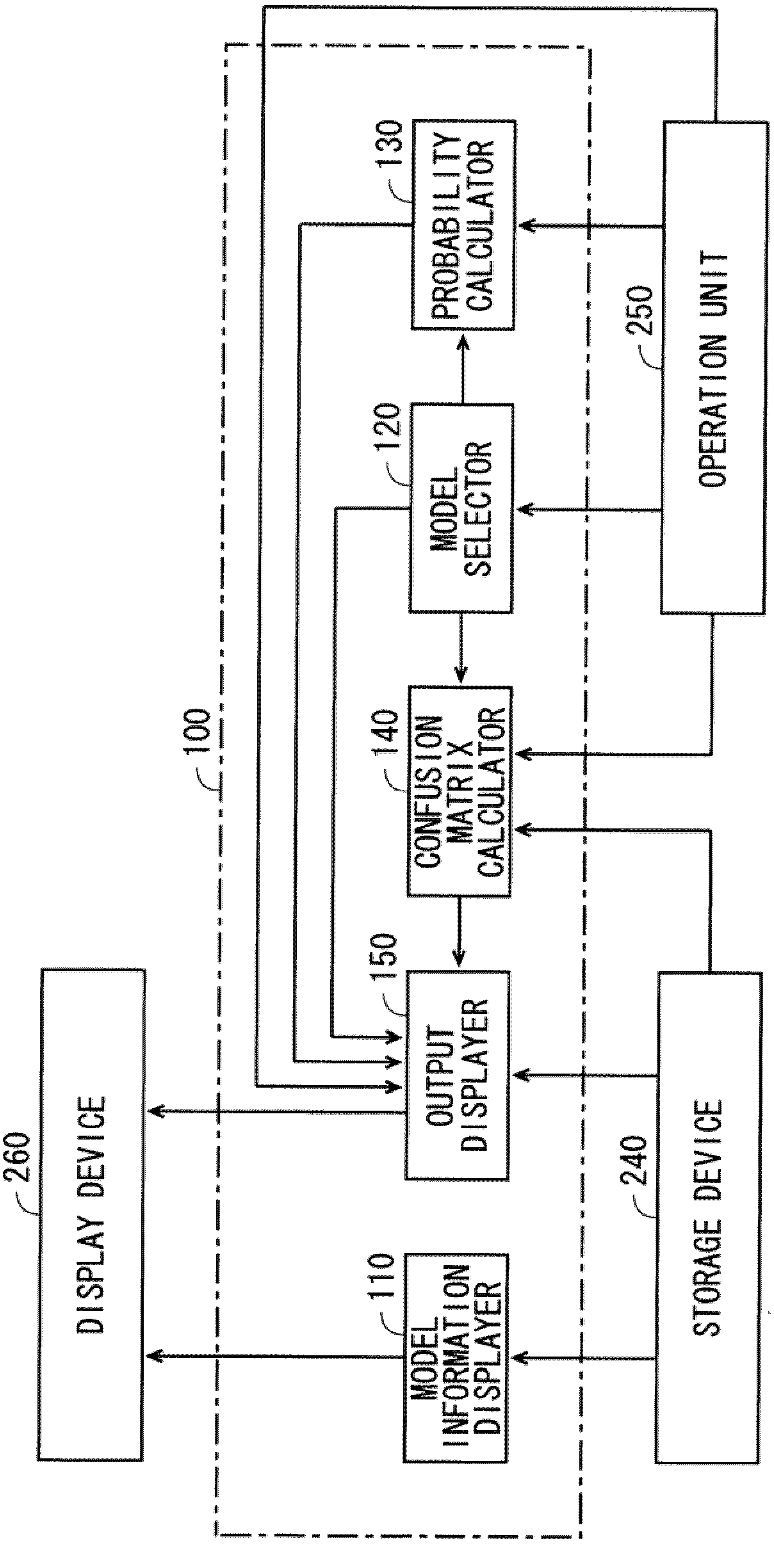
100
110
MODEL INFORMATION DISPLAYER
120
MODEL SELECTOR
130
PROBABILITY CALCULATOR
140
CONFUSION MATRIX CALCULATOR
150
OUTPUT DISPLAYER
240
STORAGE DEVICE
250
OPERATION UNIT
260
DISPLAY DEVICE

FIG.17

FIG.18

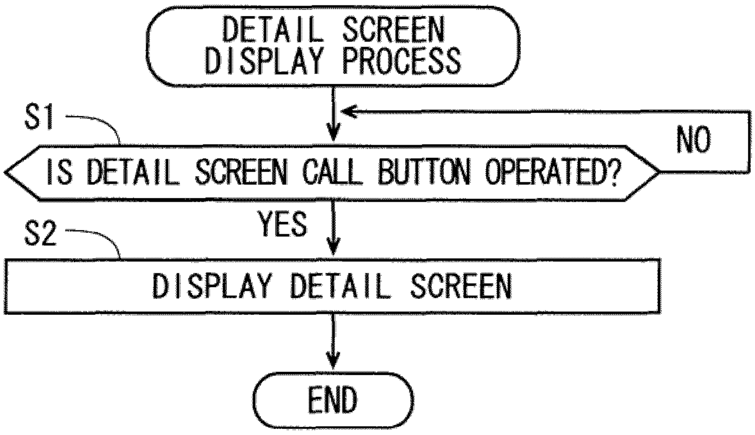
DETAIL SCREEN DISPLAY PROCESS
S1
IS DETAIL SCREEN CALL BUTTON OPERATED?
NO
YES
S2
DISPLAY DETAIL SCREEN
END

FIG.19

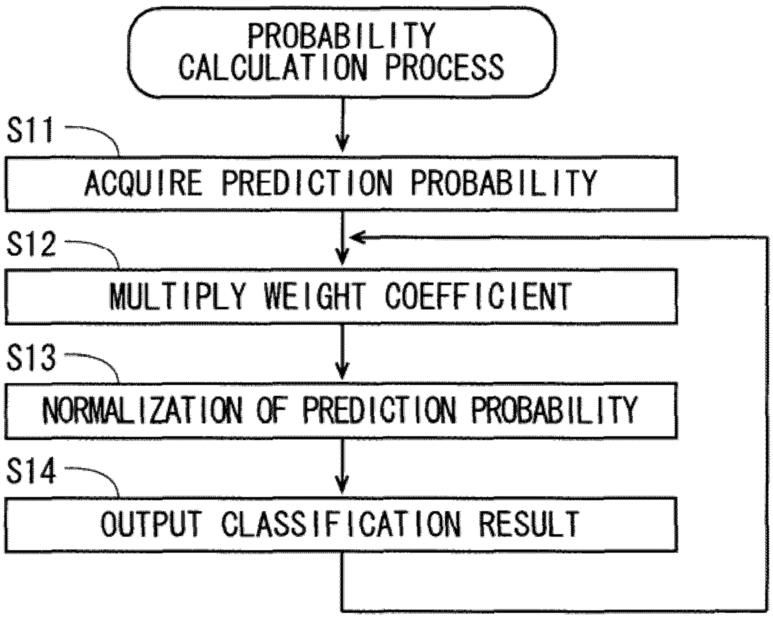
PROBABILITY CALCULATION PROCESS
S11
ACQUIRE PREDICTION PROBABILITY
S12
MULTIPLY WEIGHT COEFFICIENT
S13
NORMALIZATION OF PREDICTION PROBABILITY
S14
OUTPUT CLASSIFICATION RESULT

*FIG.20*

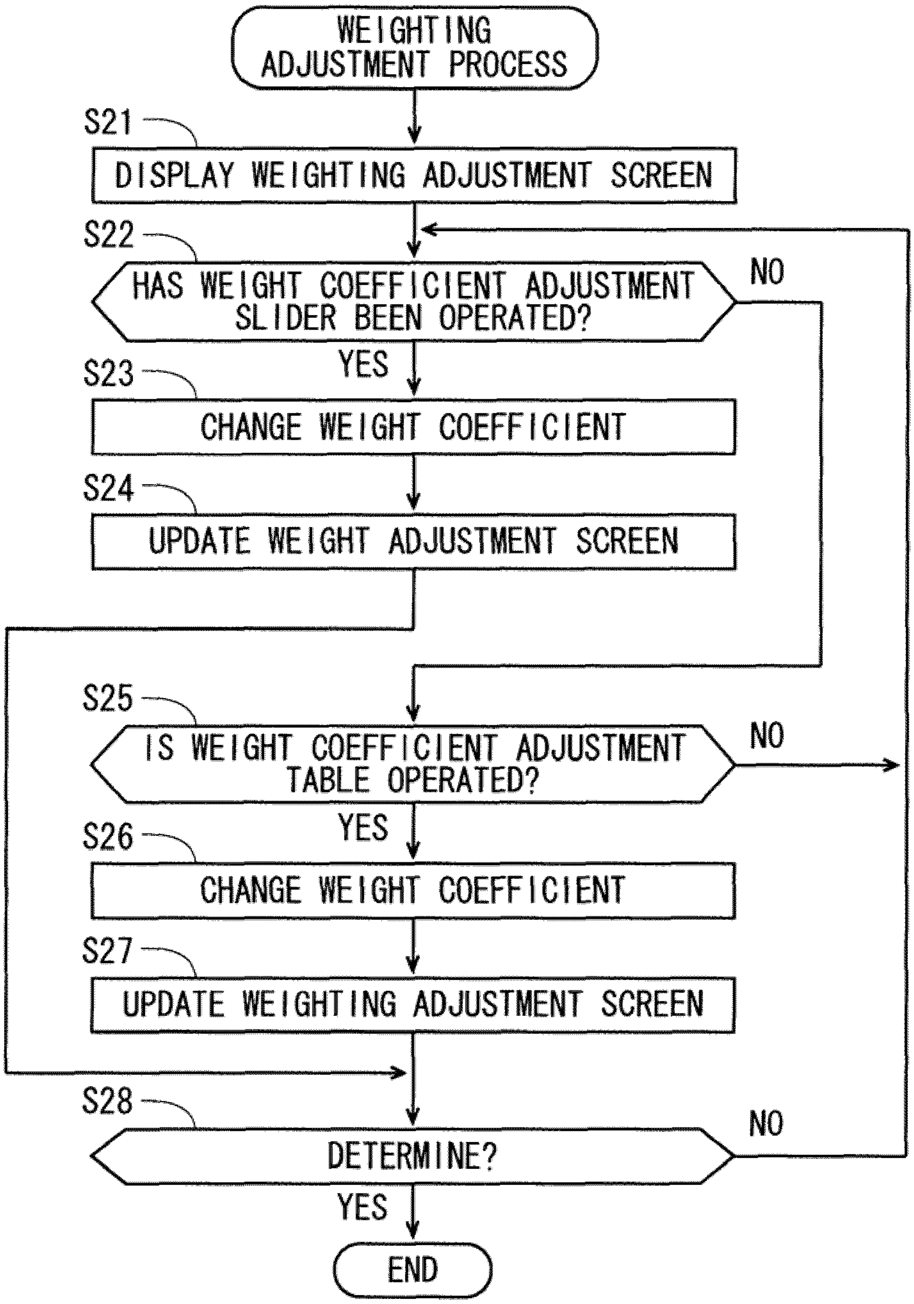
WEIGHTING ADJUSTMENT PROCESS
S21
DISPLAY WEIGHTING ADJUSTMENT SCREEN
S22
HAS WEIGHT COEFFICIENT ADJUSTMENT SLIDER BEEN OPERATED?
NO
YES
S23
CHANGE WEIGHT COEFFICIENT
S24
UPDATE WEIGHT ADJUSTMENT SCREEN
S25
IS WEIGHT COEFFICIENT ADJUSTMENT TABLE OPERATED?
NO
YES
S26
CHANGE WEIGHT COEFFICIENT
S27
UPDATE WEIGHTING ADJUSTMENT SCREEN
S28
DETERMINE?
NO
YES
END

FIG.21

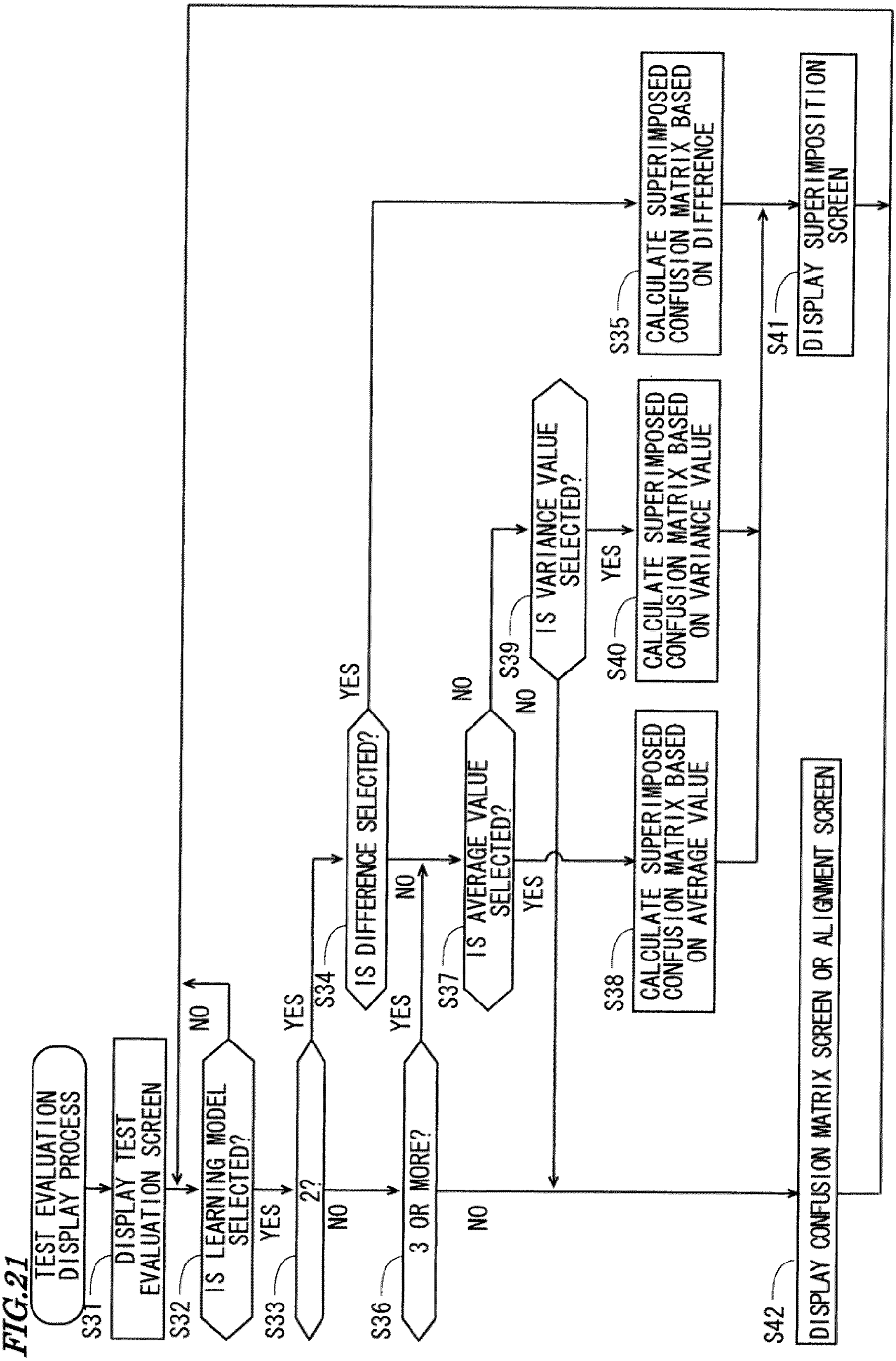
TEST EVALUATION DISPLAY PROCESS
S31
DISPLAY TEST EVALUATION SCREEN
S32
IS LEARNING MODEL SELECTED?
YES
NO
S33
2?
YES
NO
S34
IS DIFFERENCE SELECTED?
YES
NO
S35
CALCULATE SUPERIMPOSED CONFUSION MATRIX BASED ON DIFFERENCE
S36
3 OR MORE?
YES
NO
S37
IS AVERAGE VALUE SELECTED?
YES
NO
S38
CALCULATE SUPERIMPOSED CONFUSION MATRIX BASED ON AVERAGE VALUE
S39
IS VARIANCE VALUE SELECTED?
YES
NO
S40
CALCULATE SUPERIMPOSED CONFUSION MATRIX BASED ON VARIANCE VALUE
S41
DISPLAY SUPERIMPOSITION SCREEN
S42
DISPLAY CONFUSION MATRIX SCREEN OR ALIGNMENT SCREEN

Europäisches Patentamt
European Patent Office
Office européen des brevets

# EUROPEAN SEARCH REPORT

Application Number
EP 24 22 3435

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | HEYEN FRANK FRANK HEYEN@VISUS UNI-STUTTGART DE ET AL: "ClaVis An Interactive Visual Comparison System for Classifiers", PROCEEDINGS OF THE 11TH NORDIC CONFERENCE ON HUMAN-COMPUTER INTERACTION: SHAPING EXPERIENCES, SHAPING SOCIETY, ACMPUB27, NEW YORK, NY, USA, 28 September 2020 (2020-09-28), pages 1-9, XP058654794, DOI: 10.1145/3399715.3399814 ISBN: 978-1-4503-7579-5 * abstract * * Sections 1, 3, 4 * ----- | 1-6, 12-15 | INV. G06N3/10 G06N20/00 ADD. G06N3/04 G06F3/04847 |
| X | Heyen Franz ET AL: "ClaVis: An Interactive Visual Comparison System for Classifiers Overview", , 5 October 2020 (2020-10-05), XP093286709, Retrieved from the Internet: URL:https://github.com/fheyen/ClaVis/blob/841f8a678829d39293e07226e3479b9afd855fa7/supplementary_material/slides.pdf [retrieved on 2025-06-13] * page 2 * * page 8 - page 9 * * page 11 - page 14 * ----- | 1-6, 12-15 | TECHNICAL FIELDS SEARCHED (IPC) G06N G06F |

-/--

The present search report has been drawn up for all claims

3

| Place of search | Date of completion of the search | Examiner |
|---|---|---|
| The Hague | 16 June 2025 | Jacobs, Jan-Pieter |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
.......................................................................................................
& : member of the same patent family, corresponding document

EPO FORM 1503 03.82 (P04C01)

page 1 of 2

Europäisches Patentamt
European Patent Office
Office européen des brevets

# EUROPEAN SEARCH REPORT

Application Number
EP 24 22 3435

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | Heyen Franz: "ClaVis supplementary video", , 5 October 2020 (2020-10-05), XP093286729, Retrieved from the Internet: URL:https://github.com/fheyen/ClaVis/raw/841f8a678829d39293e07226e3479b9afd855fa7/supplementary_material/clavis_video_small.mp4 [retrieved on 2025-06-13] * page 2 - page 3 * * Time in video 02m38s to 3m23s * ----- | 1-6, 12-15 | |
| X | US 2023/140369 A1 (AMINIAN ALI [US] ET AL) 4 May 2023 (2023-05-04) * paragraph [0021] * * paragraph [0035] - paragraph [0053]; figures 2-3 * * paragraph [0060] * * paragraph [0061] - paragraph [0067]; figures 5-7 * ----- | 1,7-11, 15 | |
| | | | TECHNICAL FIELDS SEARCHED (IPC) |

The present search report has been drawn up for all claims

3

| Place of search | Date of completion of the search | Examiner |
|---|---|---|
| The Hague | 16 June 2025 | Jacobs, Jan-Pieter |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

page 2 of 2

## ANNEX TO THE EUROPEAN SEARCH REPORT ON EUROPEAN PATENT APPLICATION NO. EP 24 22 3435

This annex lists the patent family members relating to the patent documents cited in the above-mentioned European search report. The members are as contained in the European Patent Office EDP file on
The European Patent Office is in no way liable for these particulars which are merely given for the purpose of information.

16-06-2025

| Patent document cited in search report | Publication date | Patent family member(s) | Publication date |
|---|---|---|---|
| US 2023140369 A1 | 04-05-2023 | NONE | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2021047104 A